# EUROPEAN PATENT SPECIFICATION

(11) **EP 4 314 101 B1**
(45) Date of publication and mention of the grant of the patent: **04.03.2026**
(21) Application number: 22717611.2
(22) Date of filing: 24.03.2022
(51) Int. Cl.: C08G 18/08, C08G 18/61, C08G 18/62, C08G 18/73, C08G 18/75, C08G 18/79, C08K 3/36, C09D 5/00, C09D 175/04, C08G 18/28, B05D 7/00, B05D 1/02

(54) **CLEARCOAT COMPOSITIONS FOR PROVIDING CLEARCOATS WITH NO OR REDUCED WHITENING**
KLARLACKZUSAMMENSETZUNGEN ZUR BEREITSTELLUNG VON KLARLACKEN OHNE ODER MIT VERMINDERTEM WEISSGRAD
COMPOSITIONS TRANSPARENTES POUR FOURNIR DES TRANSPARENTS SANS BLANCHIMENT OU AVEC UN BLANCHIMENT RÉDUIT

(30) Priority: 26.03.2021 EP 21165133
(43) Date of publication of application: 07.02.2024
(73) Proprietor: BASF Coatings GmbH, 48165 Münster (DE)
(72) Inventor: MATHIEU, Mareike, 48165 Münster (DE); FEIGL, Andreas, 48165 Münster (DE); GROENEWOLT, Matthijs, 48165 Münster (DE); WEIHER, Christian, 48165 Münster (DE); WEGNER, Jens, 48165 Münster (DE)
(74) Representative: Coatings IP Association
(86) International application number: PCT/EP2022/057836
(87) International publication number: WO 2022/200533

(56) References cited:
- WO-A1-2014/086530
- US-A1- 2014 147 596
- US-B2- 10 081 738

## Description

The present invention relates to a clearcoat system comprising at least two components (A) and (B) being different from one another and being separate from each other, wherein (A) comprises at least constituents (a1) to (a5), namely at least one organic solvent (a1), at least one OH-functional polymer (a2), at least one polysiloxane (a3), at least one urea moiety or moieties containing constituent (a4), and at least one kind of fumed silica (a5), wherein the relative weight ratio of constituents (a4) and (a5) to each other within component (A) is in a range of from 1.0:0.1 to 1.0:<5.0, and wherein (B) comprises at least two constituents (b1) and (b2), which are different from one another, namely at least one organic solvent (b1), and at least organic constituent (b2) bearing on average two or more NCO-groups, wherein at least a part of these NCO-groups has been reacted with at least one silane prior to incorporation of constituent (b2) into component (B), a clearcoat composition obtainable by mixing at least components (A) and (B) of the inventive coating system with each other, a method of coating a substrate including a step of applying to an optionally pre-coated substrate the inventive clearcoat composition, and a coated substrate, which is obtainable by the inventive method.

### Background of the invention

In today's automobile finishing different substrates are painted such as bodies and bodywork parts produced from metal, for example. Usually in such applications, multicoat paint systems are constructed. Multicoat paint systems on metallic substrates consist conventionally of an electrodeposition coat, a primer-surfacer coat, a filler and one basecoat or no filler and two basecoats, and a clearcoat. In case two basecoats and a clearcoat are used, these are often applied in a 3C-1B-process, i.e. all three coats are applied wet-on-wet and are jointly cured (three coats, 1 bake).

The high technological requirements imposed on the finishes and also the functions and technological properties of each of the individual coats mentioned above are known to the skilled person. In such systems it is the clearcoats in particular that define such essential technical properties as, for example, the gloss and the brilliance or distinctiveness of image (DOI) and the weathering stability. The clearcoat coating compositions are ought to inter alia exhibit good leveling in order to have sufficient flow properties such that, following their application to a substrate, any unevennesses resulting from a spray application are evened out and hence the surface of the resulting finish is smooth. Likewise important is that the clearcoat coating compositions have a good sag behavior in order to avoid the appearance of any undesired visible finishing defects such as runs in the subsequently cured finish. In addition, of course, a good scratch resistance of the clearcoats is necessary.

In particular, in today's automotive OEM applications the customer's focus on appearance properties is increasing. To fulfil the demanding requirements and specifications of premium OEM finishes the clearcoat coating compositions used need to be able to provide good levelling and sagging stability (sag resistance) as mentioned above, in particular in case two basecoats are used for the construction of the multicoat paint systems since clearcoat layer thicknesses are usually higher in this case, and to give scratch resistant clearcoats.

Clearcoat compositions are, e.g., disclosed in WO 2010/112106 A1, WO 2004/018578 A1 and WO 00/71596 A1 as well as in WO 2013/076208 A1 and WO 2012/140131 A1:
WO 2010/112106 A1 relates to a coating composition based on aprotic solvents comprising a specific (meth)acrylic (co)polymer. WO 2004/018578 A1 discloses a coating composition comprising inter alia both hydrophobic and hydrophilic silica nanoparticles and hydrophilic silica nanoparticles and aims at providing coatings, which are scratch resistant and transparent. WO 00/71596 A1 relates to a coating composition comprising inter alia a binder, a crosslinking agent, silica and urea and/or a urea derivative. WO 00/71596 A1 aims at providing coating compositions having a reduced tendency toward running and to improve levelling and storage stability. WO 2013/076208 A1 and WO 2012/140131 A1 both disclose a solvent-based clearcoat coating composition comprising inter alia two different (meth)acrylic OH-functional copolymers, a polyamide and a urea compound.

Further clearcoat compositions are, e.g., disclosed in WO 2009/077181 A1, WO 2010/139375 A1 and WO 2010/063332 A1 as well as in EP 1 923 412 A1:
WO 2009/077181 A1 relates to a coating composition comprising inter alia an OH-functional binder, an NCO-functional crosslinker, which can be partially modified by using a silane, and a moisture captor. WO 2010/139375 A1 relates to a coating composition comprising inter alia an OH-functional binder, an NCO-functional crosslinker, an amino resin and an unsaturated, cyclic, sterically hindered amine. WO 2010/063332 A1 discloses a coating composition based on aprotic solvents, comprising inter alia an OH-functional hyperbranched dendritic polyester and a polyisocyanate, which is present in a partially silane modified form. WO 2010/063332 A1 is directed at providing coatings having a high scratch resistance and a good appearance determined by measuring the waviness. According to WO 2010/063332 A1 this is achieved by making use of the specific aforementioned polyester. EP 1 923 412 A1 relates to nanoparticle modified polyisocyanates, wherein the polyisocyanates are in turn modified by reaction with alkoxysilanes as well as coating compositions containing them.

Additional clearcoat compositions are, e.g., disclosed in WO 2014/086530 A1 and WO 2014/086529 A1:
WO 2014/086530 A1 discloses a non-aqueous coating composition such as a clearcoat composition comprising inter alia an OH-functional binder, a cycloaliphatic and an alicyclic polyisocyanate and fumed silica, wherein at least one of the two polyisocyanates is present in a partially silane modified form and at least two different kinds of silanes have been used for the modification. WO 2014/086530 A1 aims at providing coatings having a high scratch resistance, good polishability and a good appearance determined by measuring the waviness. WO 2014/086529 A1 relates to a multilayer coating effect and/or color paint system obtainable by at least subsequently applying to a substrate a primer composition, at least one pigmented basecoat composition and a clearcoat composition. The clearcoat composition inter alia contains fumed silica and a polyisocyanate, which is present in a partially silane modified form. WO 2014/086529 A1 aims at providing coatings having a reduced tendency toward whitening under moisture exposure and a good overall appearance determined by measuring the waviness.

However, the clearcoats and the clearcoat coating compositions used to prepare them not only need to display/exhibit good levelling, sagging stability and scratch resistance. At the same time the clearcoats and the clearcoat coating compositions used to prepare them need to be robust with regard to their processibility, must be resistant to the occurrence of cratering and must not show any significant whitening after humidity tests such as after condensation tests. In particular as far as the demand of no or only insignificant whitening after exposure to humidity and moisture is concerned, the clearcoats of the prior art do not always sufficiently show such a desired minimized whitening or even non-present whitening.

Thus, there is a need for clearcoat coating material compositions, which can be used to prepare clearcoats, which show no or at least a minimized whitening after exposure to humidity and/or moisture. At the same time other appearance related properties such as sagging stability and levelling should not be negatively influenced, in particular, when the clearcoat coating material compositions are used in a 3C-1B process.

### Problem

It has been therefore an object underlying the present invention to provide clearcoat coating material compositions, which can be used to prepare clearcoats, which show no or at least a minimized whitening after exposure to humidity and/or moisture. At the same time other appearance related properties such as sagging stability and levelling should not be negatively influenced, in particular, when the clearcoat coating material compositions are used in a 3C-1B process.

### Solution

This object has been solved by the subject-matter of the claims of the present application as well as by the preferred embodiments thereof disclosed in this specification, i.e. by the subject matter described herein.

A first subject-matter of the present invention is a clearcoat system comprising at least two components (A) and (B) and optionally at least one further component (C) being different from one another and being separate from each other,
wherein component (A) comprises at least constituents (a1) to (a3), which are different from one another, namely
   at least one organic solvent (a1),
   at least one OH-functional polymer (a2), and
   at least one at least one ether segment containing polysiloxane (a3),
wherein component (B) comprises at least two constituents (b1) and (b2), which are different from one another, namely
   at least one organic solvent (b1), and
   at least one organic constituent (b2) bearing on average two or more NCO-groups, wherein at least a part of these NCO-groups has been reacted with at least one silane prior to incorporation of constituent (b2) into component (B), and
wherein optional component (C) is a reducer component and comprises at least one organic solvent (c1),
characterized in that component (A) further comprises at least one constituent (a4) and at least one constituent (a5), which are different from one another and from any of constituents (a1) to (a3), (b1) and (b2), namely
   at least one urea moiety or moieties containing constituent (a4), which is an adduct of at least at least one diisocyanate and/or polyisocyanate and at least one monoamine, and
   at least one kind of fumed silica (a5),
characterized in that the relative weight ratio of constituents (a4) and (a5) to each other within component (A) is in a range of from 1.0:0.1 to 1.0:<5.0.

A further subject-matter of the present invention is a solventborne clearcoat composition obtainable by mixing at least components (A) and (B) and optionally (C) of the inventive coating system with each other.

A further subject-matter of the present invention is a method of coating a substrate, comprising at least one step of applying to an optionally pre-coated substrate the inventive clearcoat composition, preferably via spray application, to form at least one coating film onto the optionally pre-coated substrate, and optionally comprising at least one further step of curing the at least one coating film to obtain at least one cured coating layer onto the substrate.

Preferably, the inventive method is a method of preparing a multilayer coating system onto an optionally pre-coated substrate comprising at least steps (1), (3), and (4) and optionally (2), namely
(1) applying a first basecoat composition to an optionally pre-coated substrate and forming an first coating film on the optionally pre-coated substrate,
(2) optionally applying a second basecoat composition to the first coating film present on the substrate obtained after step (1) prior to curing the first coating film and forming a second coating film adjacent to the first coating film,
(3) applying a third coating composition to the first coating film present on the substrate obtained after step (1) prior to curing the first coating film and forming a third coating film adjacent to the first coating film in case optional step (2) is not performed or applying a third coating composition to the second coating film present on the substrate obtained after step (2) prior to curing the second coating film and forming a third coating film adjacent to the second coating film in case optional step (2) is performed,
   wherein the third coating composition is the inventive clearcoat composition, and
(4) jointly curing the first and third and optionally second coating films, the cured third coating film being the outermost layer of the formed multilayer coating system, to obtain cured first, optionally second, and third coating layers.

A further subject-matter of the present invention is a coated substrate, which is obtainable by the inventive method.

It has been surprisingly found that no or at least significantly reduced whitening is observed after exposing clearcoats obtained from the inventive clearcoat compositions to humidity and/or moisture conditions. In particular, it has been found that the clearcoats display an only low dL value, which is desirable in terms of whitening avoidance/reduction. The dL value is the difference between the color value L measured before and after subjecting a substrate bearing a clearcoat as outermost layer to a climate test for 240 h (condensation water test) according to DIN EN ISO 6270-2:2018-04.

It has been particularly found that the presence of the fumed silica constituent (a5) improves adsorption of water at the clearcoat interface and thus lessens the undesired whitening after humidity tests (less emulsion effect, light diffusion), which allows sufficiently passing customer's specifications of a number of automotive manufacturers. It has been in particular surprisingly found that no or at least significantly reduced whitening is observed even though the inventive clearcoat compositions additionally contains constituent (a4) in an amount in the range up to preferably 10.0 wt.-%, based on the total weight of component (A) used for preparing the inventive clearcoat composition. It is further particularly surprising that no or an at least significantly reduced whitening is observed even though the clearcoats obtained from making of the inventive clearcoat compositions additionally have a comparably high network density due to the use of at least one partially silanized polyisocyanate (b2) for crosslinking and, further, contain a polysiloxane constituent (a3).

Moreover, it has been particularly surprisingly found that the inventive clearcoat compositions additionally display an excellent sagging stability and excellent levelling properties, in particular due to the presence of urea constituent (a4), in particular, when the clearcoat coating material compositions are used in a 3C-1B process, where the film build is usually higher than in case of other conventional coating methods.

Further, it has been surprisingly found that additionally no undesired occurrence of cratering and/or runs is observed, in particular due to the presence of polysiloxane constituent (a3).

### Detailed description of the invention

### Inventive coating system

The inventive coating system is a two- (2K-) or multi-component clearcoat system comprising at least two components (A) and (B) being different from one another and also being separate from each other. Separate from each other in this context means that, for example, components (A) and (B) of the inventive coating system can be stored separately until they are mixed with each other in order to prepare an inventive clearcoat composition. When the inventive coating system is a multi-component coating system it preferably contains at least one further optional component (C), which is different from components (A) and (B) and also separate from both (A) and (B). Component (C) preferably is a reducer component used for diluting the to-be-prepared coating composition and thus preferably comprises at least one organic solvent (c1) and more preferably consists of at least one organic solvent (c1). In case the inventive coating system is a two-component coating system, however, which is preferred, it preferably consists of components (A) and (B).

Upon mixing of at least the two components (A) and (B) a polyurethane or polyurethane-based coating composition is formed by reaction of the OH-groups of constituent (a2) with the isocyanate groups of constituent (b2).

Preferably, both components (A) and (B) and also optional component (C) of the inventive coating system are free or essentially free of water. The same applies to the inventive coating compositions. In the sense of the present invention the term "free of water" preferably means that no water at all is present. In the sense of the present invention the term "essentially free of water" preferably means that essentially no water is present. This means that at least no water is added on purpose to any of the inventively used components (A) and (B) and optionally (C) and to the inventive coating composition. It may, however, not be ruled out that remaining residues of water formed upon preparation of any of the constituents used for preparing the inventively used components (A) and (B) and optionally (C) are present therein. Preferably, the amount of any water present in each of the components (A) and (B) and optionally (C) is less than 1 wt.-%, more preferably less than 0.5 wt.-%, even more preferably less than 0.1 wt.-%, still more preferably less than 0.05 wt.-%, yet more preferably less than 0.01 wt.-%, in particular less than 0.005 wt.-% or less than 0.001 wt.-%, in each case based on the total weight of component (A) or (B) or optionally (C).

Preferably, both components (A) and (B) and also optional component (C) of the inventive coating system are solventborne, i.e. organic solvent(s)-based. Thus, preferably, the inventive coating system is not a waterborne, i.e. an aqueous, coating system.

The term "comprising" in the context of the present invention in connection with the components (A) and (B) and optionally (C) of the inventive coating system, and the coating composition according to the invention preferably has the meaning "consisting of". In this case, in addition to the constituents (a1) to (a5) and (b1) to (b2) as well as (c1) present within components (A) and (B) and (C), one or more of the further optional constituents mentioned hereinafter contained in each of the components of the inventive coating system or coating composition according to the invention may be contained in the coating system, its components (A) and (B) and optionally (C) or coating composition according to the invention. All components can be present in each case in their preferred embodiments mentioned hereinafter.

The proportions and amounts in wt.-% (% by weight) of constituents (a1) to (a5) and (b1) to (b2) as well as (c1) present within components (A) and (B) and (C) and of further optionally present constituents in the coating system add up to 100 wt.-%, based in each case on the total weight of the respective component (A) or (B) or (C) of the coating system. The same applies to components (A) and (B) and optionally (C): The proportions and amounts in wt.-% (% by weight) of components (A) and (B) and (C) add up to 100 wt.-%, based on the total weight of the clearcoat composition according to the invention.

Preferably, both components (A) and (B) and optionally (C) of the inventive coating system are transparent, i.e. clear. Preferably, of course, also the inventive coating composition is transparent, i.e. clear. In particular, none of the components (A) and (B) and optionally (C) of the inventive coating system contains any pigments and/or fillers, in particular any color and/or effect imparting pigments and/or fillers. The same applies, of course, also preferably, to the inventive coating composition.

### Component (A)

Component (A) comprises at least constituents (a1) to (a5), but may additionally comprise further optional constituents.

Preferably, component (A) of the coating system according to the invention has a total solids content, which is >30 wt.-%, preferably >35 wt.-%, more preferably >40 wt.-%, even more preferably >45 wt.-%, based on the total weight of component (A). The total solids content of component (A) of the coating system according to the invention is preferably in a range of from >35 to 60 wt.-%, more preferably of from 40 to 57.5 wt.-%, even more preferably of from 42.5 to 55 wt.-%, in particular of from 45 to 52.5 wt.-%, based in each case on the total weight of component (A). The total solids content, in other words the non-volatile fraction, is determined in accordance with the method described hereinafter.

### Constituent (a1)

Constituent (a1) is at least one organic solvent. Examples of such organic solvents would include heterocyclic, aliphatic, or aromatic hydrocarbons, mono- or polyhydric alcohols, especially methanol and/or ethanol, ethers, esters, ketones, and amides, such as, for example, N-methylpyrrolidone, N-ethylpyrrolidone, dimethylformamide, toluene, xylene, butanol, ethyl glycol and butyl glycol and also their acetates, butyl diglycol, diethylene glycol dimethyl ether, cyclohexanone, methyl ethyl ketone, methyl isobutyl ketone, acetone, isophorone, or mixtures thereof. Component (A) may comprise more than one organic solvent (a1).

Preferably, the amount of constituent (a1) in component (A) is in the range of from 10 to 70 wt.-%, more preferably of from 15 to 65 wt.-%, based in each case on the total weight of component (A).

### Constituent (a2)

Constituent (a2) is at least one OH-functional polymer, which functions as film-forming binder. For the purposes of the present invention, the term "binder" is understood in accordance with DIN EN ISO 4618 (German version, date: March 2007) to be the non-volatile constituent of a coating composition, which is responsible for the film formation. Pigments and/or fillers contained therein are thus not subsumed under the term "binder". Preferably, the at least one OH-functional polymer such as an OH-functional (meth)acrylic copolymer is the main binder of the coating composition. As the main binder in the sense of the present invention, a binder constituent is preferably referred to, when there is no other binder constituent in the coating composition, which is present in a higher proportion based on the total weight of the coating composition.

The term "polymer" is known to the person skilled in the art and, for the purposes of the present invention, encompasses polyadducts and polymerizates as well as polycondensates. The term "polymer" includes both homopolymers and copolymers.

The at least one OH-functional polymer (a2) preferably comprises on average two or more OH-groups.

Preferably, the at least one OH-functional polymer (a2) has a weight average molecular weight M_{w}, measured by means of gel permeation chromatography (GPC) against a polystyrene standard, preferably between 800 and 100 000 g/mol, more particularly between 1000 and 75 000 g/mol.

Particularly preferred constituents (a2) are selected from the group consisting of polyesters, polyurethanes, poly(meth)acrylates and mixtures thereof. As outlined above these terms include both homopolymers and copolymers in each case.

Suitable polyesters are described for example in EP-A-0 994 117 and EP-A-1 273 640. Polyurethane polyols are prepared preferably by reaction of polyester polyol prepolymers with suitable di- and/or polyisocyanates and are described for example in EP-A-1 273 640.

Preferably, the at least one OH-functional polymer (a2) is at least one OH-functional (meth)acrylic copolymer and/or at least one OH-functional polyester, preferably at least one OH-functional (meth)acrylic copolymer. Preferably at least two OH-functional (meth)acrylic copolymer are present as constituent (a2) in component (A), which are different from one another.

Preferably, the at least one OH-functional polymer (a2) has an OH number of 30 to 400 mg KOH/g, more particularly between 100 and 300 KOH/g. The glass transition temperature, measured by means of DSC measurements in accordance with DIN EN ISO 11357-2 (2019-03), of this polymer is preferably between -150 and 100°C, more preferably between -120°C and 80°C.

The term "(meth) acryl" or "(meth) acrylate" or (meth)acrylic" in the context of the present invention in each case comprises the meanings "methacryl" and/or "acryl" "methacrylic" and/or "acrylic" or "methacrylate" and/or "acrylate". Therefore, a "(meth)acrylic copolymer" in general may be formed from only "acrylic monomers", only "methacrylic monomers" or "acrylic and methacrylic monomers". However, polymerizable monomers other than acrylic and/or methacrylic monomers as e.g. styrene and the like may also be contained in a "(meth)acrylic copolymer". In other words a (meth)acrylic polymer may consist of only acrylic and/or methacrylic monomer units but does not have to. The notation "(meth)acrylate polymer or copolymer" or "(meth)acrylic polymer or copolymer" is intended to mean that the polymer/copolymer (polymer skeleton/backbone) is formed predominantly, i.e. preferably more than 50% or more than 75% of the monomer units used, from monomers having a (meth)acrylate group. In the preparation of a (meth)acrylic copolymer, preferably more than 50% or 75% of the monomers thus have a (meth)acrylate group. However, the use of further monomers as comonomers such as copolymerizable vinyl monomers, e.g. styrene, for its preparation is not excluded.

The (meth)acrylic copolymer is OH-functional. Hydroxyl-containing monomers include hydroxy alkyl esters of acrylic or methacrylic acid, which can be used for preparing the copolymer. Non-limiting examples of hydroxyl-functional monomers include hydroxyethyl(meth)acrylate, hydroxypropyl(meth)acrylates, hydroxybutyl-(meth)acrylates, hydroxyhexyl(meth)acrylates, propylene glycol mono(meth)acrylate, 2,3-dihydroxypropyl(meth)acrylate, pentaerythritol mono(meth)acrylate, polypropylene glycol mono(meth)acrylates, polyethylene glycol mono(meth)acrylates, reaction products of these with epsilon-caprolactone, and other hydroxyalkyl-(meth)acrylates having branched or linear alkyl groups of up to about 10 carbons, and mixtures of these, where the term "(meth)acrylate" indicates either or both of the methacrylate and acrylate esters. Generally, at least about 5 % by weight hydroxyl-functional monomer is preferably included in the polymer. Hydroxyl groups on a vinyl polymer such as an acrylic polymer can be generated by other means, such as, for example, the ring opening of a glycidyl group, for example from copolymerized glycidyl methacrylate, by an organic acid or an amine.

Hydroxyl functionality may also be introduced through thio-alcohol compounds, including, without limitation, 3-mercapto-1-propanol, 3-mercapto-2-butanol, 11-mercapto-1-undecanol, 1-mercapto-2-propanol, 2-mercaptoethanol, 6-mercapto-1-hexanol, 2-mercaptobenzyl alcohol, 3-mercapto-1,2-proanediol, 4-mercapto-1-butanol, and combinations of these. Any of these methods may be used to prepare a useful hydroxyl-functional (meth)acrylic polymer.

Examples of suitable comonomers that may be used include, without limitation, α,β-ethylenically unsaturated monocarboxylic acids containing 3 to 5 carbon atoms such as acrylic, methacrylic, and crotonic acids and the alkyl and cycloalkyl esters, nitriles, and amides of acrylic acid, methacrylic acid, and crotonic acid; α,β-ethylenically unsaturated dicarboxylic acids containing 4 to 6 carbon atoms and the anhydrides, monoesters, and diesters of those acids; vinyl esters, vinyl ethers, vinyl ketones, and aromatic or heterocyclic aliphatic vinyl compounds. Representative examples of suitable esters of acrylic, methacrylic, and crotonic acids include, without limitation, those esters from reaction with saturated aliphatic alcohols containing 1 to 20 carbon atoms, such as methyl, ethyl, propyl, isopropyl, n-butyl, isobutyl, tert-butyl, hexyl, 2-ethylhexyl, dodecyl, 3,3,5-trimethylhexyl, stearyl, lauryl, cyclohexyl, alkyl-substituted cyclohexyl, alkanol-substituted cyclohexyl, such as 2-tert-butyl and 4-tert-butyl cyclohexyl, 4-cyclohexyl-1-butyl, 2-tert-butyl cyclohexyl, 4-tert-butyl cyclohexyl, 3,3,5,5,-tetramethyl cyclohexyl, tetrahydrofurfuryl, and isobornyl acrylates, methacrylates, and crotonates; unsaturated dialkanoic acids and anhydrides such as fumaric, maleic, itaconic acids and anhydrides and their mono- and diesters with alcohols such as methanol, ethanol, propanol, isopropanol, butanol, isobutanol, and tert-butanol, like maleic anhydride, maleic acid dimethyl ester and maleic acid monohexyl ester; vinyl acetate, vinyl propionate, vinyl ethyl ether, and vinyl ethyl ketone; styrene, α-methyl styrene, vinyl toluene, 2-vinyl pyrrolidone, and p-tert-butylstyrene.

The (meth)acrylic copolymer may be prepared using conventional techniques, such as by heating the monomers in the presence of a polymerization initiating agent and optionally a chain transfer agent. The polymerization may be carried out in solution, for example. Typical initiators are organic peroxides such as dialkyl peroxides such as dit-butyl peroxide, peroxyesters such as t-butyl peroxy 2-ethylhexanoate, and t-butyl peracetate, peroxydicarbonates, diacyl peroxides, hydroperoxides such as t-butyl hydroperoxide, and peroxyketals; azo compounds such as 2,2'azobis(2-methylbutanenitrile) and 1,1'-azobis(cyclohexanecarbonitrile); and combinations of these. Typical chain transfer agents are mercaptans such as octyl mercaptan, n- or tert-dodecyl mercaptan; halogenated compounds, thiosalicylic acid, mercaptoacetic acid, mercaptoethanol and the other thiol alcohols already mentioned, and dimeric alpha-methyl styrene.

The polymerization reaction is usually carried out at temperatures from about 20 °C to about 200 °C. The reaction may conveniently be done at the temperature at which the solvent or solvent mixture refluxes, although with proper control a temperature below the reflux may be maintained. The initiator should be chosen to match the temperature at which the reaction is carried out, so that the half-life of the initiator at that temperature should preferably be no more than about thirty minutes. Further details of addition polymerization generally and of polymerization of mixtures including (meth)acrylate monomers is readily available in the polymer art. The solvent or solvent mixture is generally heated to the reaction temperature and the monomers and initiator(s) are added at a controlled rate over a period of time, usually between 2 and 6 hours. A chain transfer agent or additional solvent may be fed in also at a controlled rate during this time. The temperature of the mixture is then maintained for a period of time to complete the reaction. Optionally, additional initiator may be added to ensure complete conversion.

The (meth)acrylic copolymers that are especially preferred in accordance with the invention for use as constituent (a2) preferably have a weight average molecular weight M_{w} between 1000 and 35 000 g/mol, more preferably between 1500 and 30 000 g/mol, even more preferably between 3000 and 25 000 g/mol, still more preferably between 5000 and 20 000 g/mol, measured in each case by means of gel permeation chromatography (GPC) against a polystyrene standard. The glass transition temperature of the copolymers is preferably between -100 and 100°C, more particularly between -60 and < 20°C (measured by means of DSC measurements in accordance with DIN EN ISO 11357-2 (2019-03)). The copolymers preferably have an OH number of 60 to 300 mg KOH/g, more particularly between 70 and 200 mg KOH/g, and an acid number of between 0 and 30 mg KOH/g.

If the at least one constituent (a2) is at least one (meth)acrylic polymer it is preferably present in the component (A) in an amount in the range of from 5.0 wt.-% to 85.0 wt.-%, based on the total weight of component (A). More preferably, the at least one (meth)acrylic polymer (a2) is present in component (A) in an amount in the range of from 10.0 wt.-% to 80.0 wt.-%, yet more preferably of from 15.0 wt.-% to 75.0 wt.-%, even more preferably of from 20.0 wt.-% to 70.0 wt.-%, still more preferably of from 25.0 to 65.0 wt.-%, most preferably of from 30.0 to 60.0 wt.-%, in each case based on the total weight of component (A).

### Constituent (a3)

Constituent (a3) is at least one at least one ether segment(s) containing polysiloxane. The ether segment(s) may be incorporated into a side chain of the polysiloxane. Preferably, the at least one ether segment(s) containing polysiloxane is a polysiloxane, which contains polyether units, i.e. is a polyether modified polysiloxane. Preferably, constituent (a3) contains ether segment(s) -[O-R]ₙ-, with n being a parameter in the range of from 1 to 1000, more preferably of from 1 to 500 or 1 to 100, in particular of from 2 to <100, and each R being independently of one another an ethylene, propylene and/or butylene residue.

Preferably, the polysiloxane is a polydialkylsiloxane such as a polydimethylsiloxane and/or a polymethylalkylsiloxane, wherein alkyl does not represent methyl, preferably being side-chain modified with polyether units. Most preferred is a polymethylalkylsiloxane, preferably being side-chain modified with polyether units, wherein alkyl does not represent methyl.

Preferably, constituent (a3) is present in an amount in the range of from 0.01 to 2.5 wt.-%, based on the total weight of component (A), more preferably in an amount in the range of from 0.01 to 2.0 wt.-%, even more preferably of from 0.01 to 1.5 wt.-%, still more preferably of from 0.02 to 1.0 wt.-%, in each case based on the total weight of component (A).

Preferably, constituent (a3) functions as additive, which lowers the surface tension of the clearcoat to be prepared in order to avoid/reduce the occurrence of craters. Commercial products that can be used as constituent are e.g. commercially available from Byk Chemie GmbH such as BYK^{®} 325 and BYK^{®} 333.

### Constituent (a4)

Component (A) contains at least one urea moiety or moieties containing constituent (a4), which is an adduct of at least at least one diisocyanate and/or polyisocyanate, preferably of at least one diisocyanate, and at least one monoamine.

Preferably, constituent (a4) is present in an amount in the range of from 0.10 to 10.0 wt.-%, more preferably of from 0.10 to 8.0 wt.-%, even more preferably in an amount in the range of from 0.10 to 7.0 wt.-%, yet more preferably of from 0.10 to 5.0 wt.-%, still more preferably of from 0.10 to 4.0 wt.-%, yet more preferably of from 0.10 to 3.0 wt.-%, still more preferably of from 0.10 to 2.0 wt.-%, in particular of from 0.10 to 1.5 wt.-%, most preferably of from 0.10 to 1.0 wt.-%, in each case based on the total weight of component (A). Alternatively and also preferably, constituent (a4) is present in an amount in the range of from 0.20 to 8.0 wt.-%, based on the total weight of component (A), more preferably in an amount in the range of from 0.20 to 7.0 wt.-%, even more preferably of from 0.20 to 5.0 wt.-%, still more preferably of from 0.20 to 4.0 wt.-%, yet more preferably of from 0.20 to 3.0 wt.-%, still more preferably of from 0.20 to 2.0 wt.-%, in particular of from 0.20 to 1.5 wt.-%, most preferably of from 0.20 to 1.0 wt.-%, in each case based on the total weight of component (A).

Preferably, constituent (a4) is present in an amount in the range of from 0.02 to 5.0 wt.-%, based on the total weight of the at least one constituent (a2) of component (A), more preferably in an amount in the range of from 0.04 to 4.0 wt.-%, even more preferably of from 0.1 to 3.5 wt.-%, in each case based on the total weight of the at least one constituent (a2) of component (A).

Preferably, urea moiety or moieties containing constituent (a4) functions as sag control agent (SCA). Urea moiety or moieties containing constituents (a4) for use as constituent (a4) are, e.g., disclosed in WO 2013/076208 A1 and WO 2012/140131 A1. A person skilled in the art is aware that there are so-called transparent sag control agents, which are e.g. disclosed in WO 2013/076208 A1, and opaque sag control agents, which are e.g. disclosed in WO 2012/140131 A1.

Preferably, no other starting material besides the at least one diisocyanate and/or polyisocyanate and the at least one monoamine is used for preparing urea moiety or moieties containing constituent (a4). However, alternatively, it is also possible that the adduct (a4) is prepared by additionally making use of an OH-functional polymer such as at least part of constituent (a2) and/or optional constituent (a6) described hereinafter. For example, a constituent (a4) may be prepared by reaction of the monoamine with the diisocyanate and/or polyisocyanate under formation of urea bonds, which still bears NCO-groups. These may then further react with the above mentioned OH-functional polymer.

In particular, constituent (a4) is prepared by adding the at least one diisocyanate and/or polyisocyanate, preferably the at least one diisocyanate, to a mixture of the at least one monoamine in the presence of at least one OH-functional polymer, preferably of at least one OH-functional (meth)acrylic copolymer, which can be identical to or different from the at least one OH-functional polymer (a2) and/or identical to or different from the optional polymer (a6) in case (a6) bears OH-groups. Thereby an adduct bearing both at least one urea and at least one urethane moiety is formed.

Preferably, urea moiety or moieties containing constituent (a4) does not contain any free NCO-groups, in particular no remaining free NCO-groups due to using the diisocyanate and/or polyisocyanate for its preparation. Alternatively, such NCO-groups may still be present, which will then react with the OH-groups of at least constituent (a2) under formation of additionally present urethane bonds within (a4).

Polyisocyanates, which can be used in principle for preparing constituent (a4), are organic monomers, oligomers and polymers containing two or more isocyanate groups per molecule. Diisocyanates, which can be used in principle for preparing constituent (a4), are organic monomers, oligomers and polymers containing precisely two or isocyanate groups per molecule. It is also possible to use reaction products as diisocyanates and/or polyisocyanates, which contain isocyanate groups and are in turn the products of reaction of for example, polyols and polyamines and polyisocyanates. The diisocyanates and/or polyisocyanates can be aliphatic including cycloaliphatic or aromatic. Preference is given to using diisocyanates, very specifically aliphatic diisocyanates, more particularly hexamethylene diisocyanate. The following are mentioned as examples of polyisocyanates and/or diisocyanates that can be used: tetramethylene 1,4-diisocyanate, hexamethylene 1,6-diisocyanate, cyclohexyl 1,4-diisocyanate, dicyclohexylmethane 4,4-diisocyanate, 1,5-dimethyl-(2,4-omega-diisocyanatomethyl)benzene, 1,5-dimethyl-(2,4-omega-diisocyanato-ethyl)benzene, 1,3,5-trimethyl-(2,4-omega-diisocyanatomethyl)benzene, 1,3,5-triethyl-(2,4-omega-diisocyanatomethyl)benzene, the trimer of hexamethylene 1,6-diisocyanate, isophorone diisocyanate, 2,4-toluene diisocyanate and/or 2,6-toluene diisocyanate.

Monoamines, which can be used in principle for preparing constituent (a4), are organic monomers, oligomers and polymers containing precisely one amino group per molecule. The amino group is preferably a primary or secondary, more preferably a primary, amino group. The monoamine can be aliphatic including cycloaliphatic or aromatic. Examples of suitable monoamines are ethylamine, 1-propyamine, 2-propylamine, 1-butylamine, 2-butyamine, benzylamine and methoxypropylamine. Most preferred are benzylamine or methoxypropylamine.

Preferably, the at least one monoamine is used in an amount for preparing constituent (a4) that ensures that all isocyanate groups of the polyisocyanates and/or diisocyanates used are converted to urea groups. In this case the adduct is formed only from making use of the polyisocyanate and/or diisocyanate and the monoamine.

Constituent (a4) is preferably prepared in the form of a paste containing at least one organic solvent such as at least one organic solvent (a1) and also at least one polymer such as an OH-functional polymer such as at least one part of the at least one OH-functional polymer (a2) and/or at least part of the optionally also present polymer (a6), which is described in more detail hereinafter. This paste may then be used for preparation of component (A). Thus, constituent (a4) may be prepared, for example, directly in the presence of at least one polymer such as an OH-functional polymer such as at least one part of the at least one OH-functional polymer (a2) and/or at least part of the optionally also present polymer (a6). In this case, the procedure for preparing the paste, for example, is to add the monoamine such as methoxypropylamine or benzylamine to a solution or dispersion of at least one polymer such as an OH-functional polymer such as at least one part of the at least one OH-functional polymer (a2) and/or at least part of the optionally also present polymer (a6) in at least one organic solvent or in a mixture of organic solvents such as at least one organic solvent (a1), and then to add the polyisocyanate and/or dissocyanate. In such a case there may be also, for example, as already outlined hereinbefore occurring a linking of the polyisocyanate and/or diisocyanate and/or of a precursor of constituent (a4) still containing isocyanate groups, with the at least one OH-functional polymer.

Urea moiety or moieties containing constituent (a4) as adduct of a polyisocyanate and/or diisocyanate and methoxypropylamine in the form of mixtures with OH-functional polymers are available, for example, as commercial products of the company Allnex. An example is Setalux^{®} 81753 SS-55. Urea moiety or moieties containing constituent (a4) as adduct of a polyisocyanate and/or diisocyanate and benzylamine in the form of mixtures with OH-functional polymers are also available, for example, as commercial products of the company Allnex. An example is Setalux^{®} 91756 VS-60.

The use of a urea moiety or moieties containing constituent (a4), that is an adduct of a polyisocyanate and/or diisocyanate and methoxypropylamine, is particularly preferred, especially when used in combination with hydrophobic silica as constituent (a5).

### Constituent (a5)

Component (A) contains at least one kind of fumed silica as constituent (a5).

Preferably, constituent (a5) is present in an amount in the range of from 0.10 to 10.0 wt.-%, more preferably of from 0.20 to 8.0 wt.-%, even more preferably of from 0.20 to 7.0 wt.-%, yet more preferably of from >0.20 to 5.0 wt.-%, still more preferably of from 0.25 to 4.0 wt.-%, yet more preferably of from 0.30 to 3.0 wt.-%, in each case based on the total weight of component (A).

Preferably, constituent (a5) is present in an amount in the range of from 0.02 to 5.0 wt.-%, based on the total weight of the at least one constituent (a2) of component (A), more preferably in an amount in the range of from 0.04 to 4.0 wt.-%, even more preferably of from 0.1 to 3.5 wt.-%, in each case based on the total weight of the at least one constituent (a2) of component (A).

Fumed silica for use as constituent (a5) is, e.g., disclosed in WO 2014/086530 A1.

Preferably, the fumed silica for use as constituent (a5) has a chainlike structure and is an agglomerate and/or or aggregate of silicon dioxide primary particles. Preferably, constituent (a5) is pyrogenic fumed silica. Constituent (a5) is particularly obtainable by flame hydrolysis of silicon halogen compounds. Fumed silica of this kind is available commercially, for example, under the Aerosil^{®} designation from Evonik Degussa.

As the skilled person is aware, through suitable reaction conditions during the flame hydrolysis and surface modifications to the primary silicon dioxide particles, it is possible to vary the parameters and hence also the properties of the fumed silica particles in a controlled way. For example, a part is played by the primary particle size of the silicon dioxide particles, since in general the tendency to form agglomerates goes down as the primary particle size goes up. Furthermore, of course, a small primary particle size implies a high specific surface area. Moreover, a distinction is made in particular between hydrophilic silica and hydrophobic silica. It is possible to use either hydrophilic silica or hydrophobic silica, or a mixture of hydrophilic silica and hydrophobic silica.

The fumed silica produced by means of flame hydrolysis has various functional groups on its surface, especially silanol groups and/or siloxane groups. It is therefore hydrophilic as such and can be used without further modification to its surface.

It is also possible to use fumed silica whose surface has been modified with monomeric and/or oligomeric compounds. Surface modification is typically accomplished by attachment of the groups located on the silica surface, such as silanol groups, for example, to monomeric and/or oligomeric compounds. These monomeric or oligomeric compounds therefore contain at least one group which has an affinity for the groups located on the particle surface. The attachment may be accomplished, for example, by covalent bonding, ionic attachment and/or physisorption. The part of the monomeric and/or oligomeric compounds that is not needed for attachment to the silica particle surface protrudes preferably wholly or partly into the medium surrounding the particles. The monomeric and/or oligomeric compounds that are used for surface modification may contain further functional groups in addition to the group required for attachment to the surface of the silica particles, these further functional groups being able, for example, to react with constituent (a2). A surface modification of this kind is accomplished for example by addition of hydrolyzable silanes which further carry at least one additional functional group to the silica particles.

Examples of hydrolyzable silanes suitable for the surface modification of the particles include those silanes which, as a group reactive toward constituent (a2) and/or toward (b2), comprise a glycidyl group, an amino group, a hydroxyl group and/or a mercapto group.

For surface modification, however, it is possible in accordance with the invention to use monomeric and/or oligomeric compounds which as well as the group that is reactive toward silanol groups have one or more hydrophobic radicals and so are associated with a hydrophobicizing of the silica particles and therefore serve to produce the hydrophobic silica. For modifying the silica it is preferred to use organofunctional silicon compounds having at least one alkyl group with 1 to 50 carbon atoms, more particularly with 1 to 10 carbon atoms, and with at least one hydrolyzable group, and/or with at least one hydroxyl and/or amino group. Examples of such compounds are alkylalkoxysilanes, more particularly dialkyldialkoxysilanes and alkyltrialkoxysilanes, alkylhalosilanes, more particularly alkylchlorosilanes, preferably trialkylchlorosilanes and dialkyldichlorosilanes, alkylpolysiloxanes, dialkylpolysiloxanes, and alkyldisilazanes and the like. Octamethylcyclotetrasiloxane may be in particular used.

As hydrophobic silica it is particularly preferred here to use silanized, pyrogenically prepared silicas which have monomethylsilyl groups and/or dimethylsilyl groups and/or trimethylsilyl groups fixed on the surface. These can be prepared for example by surface-modifying a pyrogenically prepared silicon dioxide with trimethylchlorosilane and/or dimethyldichlorosilane and/or monomethyltrichlorosilane.

Preferably, constituent (a5) has an average primary particle size of <50 nm, more preferably of <30 nm, even more preferably of <20 nm, in particular of <15 nm, most preferred of <10 nm.

Preferably, constituent (a5) has an internal BET surface area of more than 100 m²/g, more particularly have an internal BET surface area of more than 200 m²/g. In case of hydrophilic fumed silica, internal BET surface area is preferably >300 m²/g.

Examples of hydrophilic silica are also the customary and known products which are available commercially and are sold, for example, by Degussa Evonik under the brand name Aerosil^{®} 380, Aerosil^{®} 300, Aerosil^{®} 200, Aerosil^{®} 150 and Aerosil^{®} 130, or by Wacker under the type designation T 40, with Aerosil^{®} 380 being used in particular.

Examples of hydrophobic silica are customary and known products as sold, for example, by Degussa Evonik under the brand name Aerosil^{®} more particularly Aerosil^{®} R816, R711, 8200, R106, R972, R974, R805, R812, or R812S, or by Wacker under the brand name or type designation HDK, more particularly HDK H 15, H 18, H 20, H 30 or 2000, with Aerosil^{®} R106 and/or R812 being used in particular.

Constituent (a5) is incorporated into component (A) preferably by making use of a dispersion and/or solution of at least one polymer such as at least part of the at least one constituent (a2) and/or at least part of the at least one optional constituent (a6) in at least one organic solvent such as at least one organic solvent (a1).

The use of hydrophobic silica as constituent (a5) is particularly preferred, especially when used in combination with a urea moiety or moieties containing constituent (a4), that is an adduct of a polyisocyanate and/or diisocyanate and methoxypropylamine.

The relative weight ratio of constituents (a4) and (a5) to each other within component (A) is in a range of from 1.0:0.1 to 1.0:<5.0.

Preferably, the relative weight ratio of constituents (a4) and (a5) to each other within component (A) is in a range of from 1.0:0.2 to 1.0:<5.0, more preferably of from 1.0:0.4 to 1.0:<5.0, even more preferably of from 1.0:0.5 to 1.0:<5.0, yet more more preferably of from 1.0:0.7 to 1.0:<5.0, even more preferably of from 1.0:0.9 to 1.0:<5.0, yet more preferably of from 1.0:1.0 to 1.0:<5.0, still more preferably of from 1.0:1.1 to 1.0:<5.0, yet more preferably of from 1.0:1.5 to 1.0:<5.0, even more preferably of from 1.0:1.7 to 1.0:<5.0, still more preferably of from 1.0:1.8 to 1.0:<5.0, yet more preferably of from 1.0:2.0 to 1.0:<5.0, in particular of from 1.0:2.2 to 1.0:<5.0, most preferably of from 1.0:2.2 to 1.0:4.8 or of from 1.0:2.2 to 1.0:4.5 or of from 1.0:2.2 to 1.0:4.0 or of from 1.0:2.2 to 1.0:3.8.

### Optional constituent (a6)

Component (A) may comprise - besides the at least one OH-functional polymer (a2) - at least one further polymer as constituent (a6), which may also function as binder, and which is different from OH-functional polymer (a2).

Constituent (a6) preferably comprises crosslinkable groups, which may also be OH-groups as in the case of (a2), but may also be different therefrom, i.e. can be selected from the group consisting of primary amino groups, secondary amino groups, thiol groups, carboxyl groups and carbamate groups. Preferably, an optionally present constituent (a6) has functional hydroxyl groups (OH-groups) and/or carbamate groups, in particular hydroxyl groups.

Optional constituent (a6) may be e.g. an carbamate-functional (meth)acrylic copolymer that may additionally comprise OH-groups. Likewise, e.g. polyethers, polyurethanes, polyols based on natural oils, such as those available under the trademark Polycin^{®} from Vertellus Specialties Inc., Indianapolis, Ind., for example a polyol based on castor oil may be used as constituent (a6).

### Optional constituent (a7)

Component (A) may comprise at least one catalyst (a7), preferably for the crosslinking of the silane groups present within constituent (b2). Examples are metal complexes with chelate ligands based on zinc or aluminum, such as Lewis acids or the titanates described in WO 05/03340 A1, for example, but when selecting the catalysts it should be ensured that they do not result in any undesired yellowing of the inventive coating compositions. Moreover, some catalysts whose use is known are less desirable on toxicological grounds.

It is therefore preferred for phosphorus-containing, more particularly phosphorus-containing and nitrogen-containing, catalysts to be used as catalyst (a7). In this context it is also possible to use mixtures of two or more different catalysts (a7).

Examples of suitable phosphorus-containing catalysts (a7) are substituted phosphonic diesters and diphosphonic diesters, preferably from the group consisting of acyclic phosphonic diesters, cyclic phosphonic diesters, acyclic diphosphonic diesters and cyclic diphosphonic diesters. Catalysts of these kinds are described for example in German patent application DE-A-102005045228.

More particularly, however, use is made of substituted phosphoric monoesters and phosphoric diesters, preferably from the group consisting of acyclic phosphoric diesters and cyclic phosphoric diesters, more preferably amine adducts of phosphoric monoesters and diesters.

Used with very particular preference as catalyst (a7) are the corresponding amine-blocked phosphoric esters, and, of these, more particularly, amine-blocked ethylhexyl phosphates and amine-blocked phenyl phosphates, very preferably amine-blocked bis(2-ethylhexyl) phosphate.

Examples of amines with which the phosphoric esters are blocked are, in particular, tertiary amines, examples being bicyclic amines, such as diazabicyclooctane (DABCO), diazabicyclononene (DBN), diazabicycloundecene (DBU), dimethyldodecylamine or triethylamine, for example. Particularly preferred for blocking the phosphoric esters is the use of tertiary amines which ensure high activity of the catalyst under the curing conditions.

Certain amine-blocked phosphoric acid catalysts are also available commercially (e.g. Nacure types from King Industries). For example, Nacure^{®} 4167 from King Industries may be mentioned as a particularly suitable catalyst based on an amine-blocked phosphoric acid partial ester.

The catalysts are used preferably in fractions of 0.01 to 20 wt.-%, more preferably in fractions of 0.1 to 10 wt.-%, based on the total binder fraction of the coating composition of the invention. A lower catalyst activity can be partially compensated by using amounts that are correspondingly higher.

### Optional constituent (a8)

Component (A) may comprise at least one resin (a8), which is in particular different from any other constituents mentioned before such as (a2), (a6) and also (b2). As constituent (a8) it is possible, for example, to use amino resins including melamine and melamine formaldehyde resins and/or epoxy resins. The customary and known amino resins are contemplated, some of whose methylol and/or methoxymethyl groups may have been defunctionalized by means of carbamate or allophanate groups. Crosslinking agents of this kind are described in patents US-A-4 710 542 and EP-B-0 245 700.

### Optional constituents (a9)

Component (A) may contain one or more commonly used additives (a9) depending on the desired application. For example, it may comprise at least one additive selected from the group consisting of reactive diluents, light stabilizers, antioxidants, deaerators, emulsifiers, slip additives, polymerization inhibitors, plasticizers, initiators for free-radical polymerizations, adhesion promoters, flow control agents, film-forming auxiliaries, flame retardants, corrosion inhibitors, siccatives, biocides, thickeners and/or matting agents. They can be used in the known and customary proportions. Preferably, their content, based on the total weight of the coating composition is 0.01 to 20.0 wt.-%, more preferably 0.05 to 15.0 wt.-%, particularly preferably 0.1 to 10.0 % By weight, most preferably from 0.1 to 7.5% by weight, especially from 0.1 to 5.0% by weight and most preferably from 0.1 to 2.5% by weight.

### Component (B)

Component (B) comprises at least one constituent (b1) and at least one constituent (b2), but may comprise further optional constituent(s).

Preferably, component (B) of the coating system according to the invention has a total solids content, which is >40 wt.-%, more preferably >45 wt.-%, even more preferably >50 wt.-%, still more preferably >55 wt.-%, in each based on the total weight of component (B). The total solids content of component (B) of the coating system according to the invention is preferably in a range of from 45 to 100 wt.-%, more preferably of from 50 to <100 wt.-%, even more preferably of from 55 to <100 wt.-%, based in each case on the total weight of component (B). The total solids content, in other words the non-volatile fraction, is determined in accordance with the method described hereinafter.

### Constituent (b1)

Constituent (b1) is at least one organic solvent. Examples of such organic solvents include the ones already mentioned hereinbefore in connection with constituent (a1). Component (B) may comprise more than one organic solvent (b1). The at least one organic solvent (b1) may the identical to or different from the at least one organic solvent (a1). If more than one organic solvent is used as (a1) and/or (b1) it may be that (a1) and (b1) are both partially identical and partially different.

Preferably, the amount of constituent (b1) in component (B) is in the range of from 5 to 50 wt.-%, more preferably of from 10 to 40 wt.-%, even more preferably of from 15 to 35 wt.-%, based in each case on the total weight of component (B).

### Constituent (b2)

Constituent (b2) is at least one organic constituent (b2) bearing on average two or more NCO-groups, wherein at least a part of these NCO-groups has been reacted with at least one silane prior to incorporation of constituent (b2) into component (B).

Examples of constituents (b2) are e.g. disclosed in WO 2009/077181 A1, WO 2010/139375 A1, WO 2010/063332 A1, WO 2014/086530 A1 and WO 2014/086529 A1.

Preferably, constituent (b2) bears at least one structural unit of the formula (I)

-NR-(X-SiR"ₓ(OR')₃₋ₓ) (I),

and/or, preferably and, at least one structural unit of the formula (II)

-N(X-SiR"ₓ(OR')₃₋ₓ)ₙ(X'-SiR"_{y}(OR')_{3-y})ₘ (II),

wherein:
R = hydrogen, alkyl, cycloalkyl, aryl or aralkyl, it being possible for the carbon chain to be interrupted by nonadjacent oxygen, sulfur or NR^{a} groups, where R^{a} = alkyl, cycloalkyl, aryl or aralkyl,
each R' = independently of one another hydrogen, alkyl or cycloalkyl, it being possible for the carbon chain to be interrupted by nonadjacent oxygen, sulfur or NR^{a} groups, each R' preferably = ethyl and/or methyl,
each X,X' = independently of one another linear and/or branched alkylene or cycloalkylene radical having 1 to 20 carbon atoms, preferably each X,X' = alkylene radical having 1 to 4 carbon atoms,
each R" = independently of one another alkyl, cycloalkyl, aryl or aralkyl, it being possible for the carbon chain to be interrupted by nonadjacent oxygen, sulfur or NR^{a} groups, each R" preferably = alkyl radical, more particularly having 1 to 6 C atoms,
n = parameter of 0 to 2, m = parameter of 0 to 2, m+n = 2, and x, y = parameter of 0 to 2.

The respective preferred alkoxy radicals (OR') may be identical or different, but what is decisive for the structure of the radicals is the extent to which they influence the reactivity of the hydrolysable silane groups. Preferably R' is an alkyl radical, more particularly having 1 to 6 carbon atoms. Particularly preferred are radicals R' which increase the reactivity of the silane groups, i.e. represent good leaving groups. Accordingly a methoxy radical is preferred over an ethoxy radical, which in turn is preferred over a propoxy radical. With particular preference, therefore, R' = ethyl and/or methyl, more particularly methyl. The reactivity of organofunctional silanes may also be influenced considerably, furthermore, by the lengths of the spacers X, X' between silane functionality and organic functional group which serves for reaction with the constituent to be modified. Examples thereof that may be mentioned include the "alpha" silanes, which are obtainable from the company Wacker, and in which there is a methylene group, instead of the propylene group present in the case of "gamma" silanes, between Si atom and functional group.

In constituent (b2) preferably, between 10 and 80 mol-%, preferably between 15 and 70 mol-%, more preferably between 20 and 50 mol-% and still more preferably between 25 and 40 mol-% of the isocyanate groups originally present have undergone reaction with the at least one silane, preferably to form structural units (I) and/or (II), more preferably to form structural units (I) and (II).

Moreover, preference is given to constituent (b2) in which the total amount of structural units (I) is between 3 and 90 mole-%, more preferably between 5 and 70 mole-%, based in each case on the entirety of the structural units (I) plus (II), and the total amount of structural units (II) is between 97 and 10 mole-%, more preferably between 95 and 30 mole-%, based in each case on the entirety of the structural units (I) plus (II).

The at least one organic constituent (b2) bearing on average two or more NCO-groups, which serves - before reaction with at the least one silane - as the parent structure for the constituent (b2) represent at this stage before reaction with the at least one silane a di- and/or polyisocyanate. Preferably, said at least one di- and/or polyisocyanate is an aromatic, aliphatic, cycloaliphatic and/or heterocyclic di- and/or polyisocyanate, in particular aliphatic an acylic.

The at least one organic constituent (b2) preferably has a cycloaliphatic parent structure and/or a parent structure that is derived from a cycloaliphatic polyisocyanate by trimerization, dimerization, urethane formation, biuret formation, uretdione formation and/or allophanate formation, wherein constituent (b2) has at least one structural unit of the formula (I) and/or (II). Alternatively or additionally, the at least one organic constituent (b2) preferably has an acyclic aliphatic parent structure and/or a parent structure that is derived from an acyclic aliphatic polyisocyanate by trimerization, dimerization, urethane formation, biuret formation, uretdione formation and/or allophanate formation, wherein constituent (b2) has at least one structural unit of the formula (I) and/or (II).

Most preferably, the at least one organic constituent (b2) has an acyclic aliphatic parent structure and/or a parent structure that is derived from an acyclic aliphatic polyisocyanate by trimerization, dimerization, urethane formation, biuret formation, uretdione formation and/or allophanate formation, wherein constituent (b2) has at least one structural unit of the formula (I) and/or (II). Trimers, i.e. isocyanurates, are particularly preferred.

The acyclic aliphatic polyisocyanates serving as parent structures are preferably substituted or unsubstituted aliphatic polyisocyanates that are known per se. Examples are tetramethylene 1,4-diisocyanate, hexamethylene 1,6-diisocyanate, 2,2,4-trimethylhexane 1,6-diisocyanate, ethylene diisocyanate, dodecane 1, 12-diisocyanate, and mixtures of the aforementioned polyisocyanates.

Additionally preferred polyisocyanate parent structures are the polyisocyanates derived from such an acyclic aliphatic polyisocyanate by trimerization, dimerization, urethane formation, biuret formation, uretdione formation and/or allophanate formation, more particularly the biuret dimer and/or the allophanate dimer and/or the isocyanurate trimer. The polyisocyanate parent structures may also be polyisocyanate prepolymers having urethane structural units which are obtained by reaction of polyols with a stoichiometric excess of aforementioned acyclic aliphatic polyisocyanates. Polyisocyanate prepolymers of this kind are described for example in US-A-4,598,131. Particularly preferred polyisocyanate parent structures are hexamethylene diisocyanate and/or its biuret dimer and/or allophanate dimer and/or isocyanurate trimer and/or its uretdione, and also mixtures of the stated polyisocyanate parent structures. Especially preferred polyisocyanate parent structures are hexamethylene diisocyanate and/or its isocyanurate trimer, optionally together with its uretdione.

The cycloaliphatic polyisocyanates used as parent structures are preferably substituted or unsubstituted cycloaliphatic polyisocyanates which are known per se. Examples of preferred polyisocyanates are isophorone diisocyanate, cyclobutane 1,3-diisocyanate, cyclohexane 1,3-diisocyanate, cyclohexane 1,4-diisocyanate, methylcyclohexyl diisocyanates, hexahydrotoluene 2,4-diisocyanate, hexahydrotoluene 2,6-diisocyanate, hexahydrophenylene 1,3-diisocyanate, hexahydrophenylene 1,4-diisocyanate, perhydrodiphenylmethane 2,4'-diisocyanate, 4,4'-methylendicyclohexyl diisocyanate (e.g. Desmodur ^{®} W from Bayer AG) and mixtures of the aforementioned polyisocyanates. Additionally preferred polyisocyanate parent structures are the polyisocyanates derived from such a cycloaliphatic polyisocyanate by trimerization, dimerization, urethane formation, biuret formation, uretdione formation and/or allophanate formation, more particularly the biuret dimer and/or the allophanate dimer and/or the isocyanurate trimer. The polyisocyanate parent structures may be ppolyisocyanate prepolymers having urethane structural units which are obtained by reaction of polyols with a stoichiometric excess of aforementioned cycloaliphatic polyisocyanates. Such polyisocyanate prepolymers are described for example in US-A-4,598,131. Particularly preferred cycloaliphatic polyisocyanates are isophorone diisocyanate and 4,4'-methylenedicyclohexyl diisocyanate and/or the biuret dimers thereof and/or the allophanate dimers thereof and/or the isocyanurate trimers thereof.

The at least one silane used for reaction with at least one organic constituent (b2) bearing on average two or more NCO-groups prior to incorporation (b2) into the (B) component is preferably
at least one compound of the formula (Ia)

   H-NR-(X-SiR"ₓ(OR')₃₋ₓ) (Ia),
and/or at least one compound of the formula (IIa)

   HN(X-SiR"ₓ(OR')₃₋ₓ)ₙ(X'-SiR"_{y}(OR')_{3-y})ₘ (IIa),
where the substituents have the definitions stated above including the preferred definitions.

Preferred compounds (Ia) are aminoalkyltrialkoxysilanes, such as, preferably, 2-aminoethyltrimethoxysilane, 2-aminoethyltriethoxysilane, 3-aminopropyltrimethoxysilane, 3-aminopropyltriethoxysilane, 4-amino-butyltrimethoxysilane, 4-aminobutyltriethoxysilane. Particularly preferred compounds (Ia) are N-(2-(trimethoxysilyl)ethyl)alkylamines, N-(3-(trimethoxysilyl)propyl)alkylamines, N-(4-(trimethoxysilyl)butyl)alkylamines, N-(2-(triethoxysilyl)ethyl)alkylamines, N-(3-(triethoxysilyl)propyl)alkylamines and/or N-(4-(triethoxysilyl)butyl)alkylamines. Especially preferred is N-(3-(trimethoxysilyl)propyl)butylamine. Aminosilanes of these kinds are available for example under the brand name DYNASYLAN^{®} from DEGUSSA or Silquest^{®} from OSI.

Preferred compounds (IIa) are bis(2-ethyltrimethoxysilyl)amine, bis(3-propyltrimethoxysilyl)amine, bis(4-butyltrimethoxysilyl)amine, bis(2-ethyltriethoxysilyl)amine, bis(3-propyltriethoxysilyl)amine and/or bis(4-butyltriethoxysilyl)amine. Especially preferred is bis(3-propyltrimethoxysilyl)amine. Aminosilanes of these kinds are available for example under the brand name DYNASYLAN^{®} from DEGUSSA or Silquest^{®} from OSI.

### Optional constituent (b3)

Component (B) may comprise at least one further constituent (b3). Constituent (b3) is at least one organic constituent bearing on average two or more NCO-groups, wherein, however, none of the NCO-groups has been reacted with any silane. Thus, the at least one organic constituent (b3) bearing on average two or more NCO-groups is preferably different from constituent (b2) and preferably does not contain any silane modified NCO-groups. The at least one organic constituent (b3) preferably has a cycloaliphatic parent structure and/or a parent structure that is derived from a cycloaliphatic polyisocyanate by trimerization, dimerization, urethane formation, biuret formation, uretdione formation and/or allophanate formation. Trimers, i.e. isocyanurates of IPDI are particularly preferred.

The cycloaliphatic polyisocyanates used as parent structures of constituent (b3) are preferably substituted or unsubstituted cycloaliphatic polyisocyanates which are known per se. Examples of preferred polyisocyanates are isophorone diisocyanate, cyclobutane 1,3-diisocyanate, cyclohexane 1,3-diisocyanate, cyclohexane 1,4-diisocyanate, methylcyclohexyl diisocyanates, hexahydrotoluene 2,4-diisocyanate, hexahydrotoluene 2,6-diisocyanate, hexahydrophenylene 1,3-diisocyanate, hexahydrophenylene 1,4-diisocyanate, perhydrodiphenylmethane 2,4'-diisocyanate, 4,4'-methylendicyclohexyl diisocyanate (e.g. Desmodur ^{®} W from Bayer AG) and mixtures of the aforementioned polyisocyanates. Additionally preferred polyisocyanate parent structures are the polyisocyanates derived from such a cycloaliphatic polyisocyanate by trimerization, dimerization, urethane formation, biuret formation, uretdione formation and/or allophanate formation, more particularly the biuret dimer and/or the allophanate dimer and/or the isocyanurate trimer. The polyisocyanate parent structures may be ppolyisocyanate prepolymers having urethane structural units which are obtained by reaction of polyols with a stoichiometric excess of aforementioned cycloaliphatic polyisocyanates. Such polyisocyanate prepolymers are described for example in US-A-4,598,131. Particularly preferred cycloaliphatic polyisocyanates are isophorone diisocyanate and 4,4'-methylenedicyclohexyl diisocyanate and/or the biuret dimers thereof and/or the allophanate dimers thereof and/or the isocyanurate trimers thereof.

### Optional component (C)

Component (C) comprises at least one organic solvent (c1) and preferably consists of at least one organic solvent (c1). Examples of such organic solvents include the ones already mentioned hereinbefore in connection with constituents (a1) and (b1). Component (C) may comprise more than one organic solvent (c1). The at least one organic solvent (c1) may the identical to or different from the at least one organic solvent (a1) and/or (b1). If more than one organic solvent is used as (a1) and/or (b1) and/or (c1) it may be that (a1) and/or (b1) and/or (c1) are both partially identical and partially different.

### Inventive coating composition

A further subject-matter of the present invention is a coating composition obtainable by mixing components (A) and (B) and optionally (C) of the coating system with each other, which is a solventborne clearcoat composition.

All preferred embodiments described above herein in connection with the inventive coating system and the preferred embodiments thereof, are also preferred embodiments of the inventive coating composition.

The preparation of the coating composition can be carried out using customary and known preparation and mixing methods and mixing units, or using conventional dissolvers and/or stirrers.

Preferably, the inventive coating composition is a solventborne, i.e. an organic solvent(s) based, coating composition, preferably due to the presence of constituents (a1) and (b1) and optionally (c1). The term "solventborne" in connection with the inventive coating composition is understood preferably for the purposes of the present invention to mean that the aforementioned organic solvent(s), as solvent and/or as diluent, is/are present as the main constituent(s) of all solvents and/or diluents present therein, preferably in an amount of at least 35 wt.-%, based on the total weight of the coating composition of the invention. Thus, preferably, the inventive coating composition is not a waterborne, i.e. an aqueous, coating composition.

The inventive coating composition preferably includes an organic solvent(s) fraction of at most 65 wt.-%, more preferably of at most 60 wt.-%, even more preferably of at most 55 wt.-%, still more preferably of at most 50 wt.-%, yet more preferably of at most 48 wt.-%, in particular of at most 45 wt.-% or of at most 40 wt.-% or of at most 35 wt.-% or of at most 30 wt.-%, based in each case on the total weight of the coating composition. All conventional organic solvents known to those skilled in the art can be used as organic solvents, i.e. as constituents (a1) and (b1) and optionally (c1). The term "organic solvent" is known to those skilled in the art, in particular from Council Directive 1999/13 / EC of 11 March 1999. Examples of the organic solvents which can be used have been mentioned hereinbefore in connection with constituents (a1) and (b1) and c1).

Preferably, the inventive coating material composition has a total solids content, which is >35 wt.-%, more preferably >40 wt.-%, even more preferably >45 wt.-%, still more preferably >50 wt.-%, based in each case on the total weight of the coating material composition.

The total solids content of the inventive coating composition is preferably in a range of from >35 to 75 wt.-%, more preferably of from >40 to 70 wt.-%, even more preferably of from >45 to 65 wt.-%, still more preferably of from >48 to 60 wt.-%, based in each case on the total weight of the coating composition. The total solids content, in other words the non-volatile fraction, is determined in accordance with the method described hereinafter.

The clearcoat compositions of the invention are employed in particular in the technologically and esthetically particularly demanding field of automotive OEM finishing and also of automotive refinish.

The term "clear coat", "clearcoat" or "clear coating" is known to a person skilled in the art and preferably represents a substantially transparent or transparent outermost layer of a multilayer coating structure applied to a substrate.

Preferably, the inventive coating composition is obtainable by mixing components (A) and (B) in a weight ratio (component (A)/component (B)) in the range of from 3:1 to 1:3. More preferably, mixing is performed in a weight ratio in the range of from 2.5:1 to 1:2.5, even more preferably in a weight ratio in the range of from 2:1 to 1:1.2, in particular in a weight ratio in the range of from 1.5:1 to 1:1.2, most preferred in a weight ratio in the range of from 1.2:1 to 1:1.2.

Preferably, the inventive clearcoat composition does not comprise more than 5 wt.-% of pigments and/or fillers, based on its total weight, since otherwise the transparency or desired clarity of the clearcoat coating layer produced from the composition could be affected. More preferably, the inventive clearcoat composition is free of any pigments and/or fillers, in particular of any effect pigments.

In particular, the inventive coating composition comprises, in each case based on the total weight of the composition, wherein the sum of all constituents present in the composition adds up to 100 wt.-%,
at least one organic solvent (a1) and at least one organic solvent (b1) in an amount in the range of from 10 to 70 wt.-%, a
at least one OH-functional polymer (a2) in an amount in the range of from 10 to 60 wt.-%,
at least one at least one ether segment containing polysiloxane (a3) in an amount in the range of from 0.005 to 1.25 wt.-%,
at least one urea moiety or moieties containing constituent (a4) in an amount in the range of from 0.05 to 5.0 wt.-%,
at least one kind of fumed silica (a5) in an amount in the range of from 0.05 to 5.0 wt.-%, and
at least one organic constituent (b2) bearing on average two or more NCO-groups, wherein at least a part of these NCO-groups has been reacted with at least one silane prior to incorporation of constituent (b2) into component (B), in an amount in the range of from 7.5 to 50.0 wt.-%,
optionally further
at least one organic constituent (b3) bearing on average two or more NCO-groups, wherein none of the NCO-groups has been reacted with any silane prior to incorporation of constituent (b3) into component (B), in an amount in the range of from 1.0 to 30.0 wt.-%, preferably of from 1.2 to 25.0 wt.-%, more preferably of from 1.4 to 20.0 wt.-%, even more preferably of from 1.6 to 15.0 wt.-%, and/or
at least one catalyst (a7) in an amount in the range of from 0.05 to 5.0 wt.-%, and/or at least one, but preferably more than one additives (a9) in an amount in the range of from 0.05 to 5.0 wt.-%.

### Inventive method

A further subject-matter of the present invention is a method of coating a substrate, comprising at least one step of applying to an optionally pre-coated substrate the inventive clearcoat composition, preferably via spray application, to form at least one coating film onto the optionally pre-coated substrate, and optionally comprising at least one further step of curing the at least one coating film to obtain at least one cured coating layer onto the substrate.

All preferred embodiments described hereinabove in connection with the inventive coating system and composition are also preferred embodiments with regard to the aforementioned inventive method.

Preferably, the inventive method is a method of preparing a multilayer coating system onto an optionally pre-coated substrate comprising at least steps (1), (3), and (4) and optionally (2), namely
(1) applying a first basecoat composition to an optionally pre-coated substrate and forming an first coating film on the optionally pre-coated substrate,
(2) optionally applying a second basecoat composition to the first coating film present on the substrate obtained after step (1) prior to curing the first coating film and forming a second coating film adjacent to the first coating film,
(3) applying a third coating composition to the first coating film present on the substrate obtained after step (1) prior to curing the first coating film and forming a third coating film adjacent to the first coating film in case optional step (2) is not performed or applying a third coating composition to the second coating film present on the substrate obtained after step (2) prior to curing the second coating film and forming a third coating film adjacent to the second coating film in case optional step (2) is performed,
   wherein the third coating composition is the inventive clearcoat composition, and
(4) jointly curing the first and third and optionally second coating films, the cured third coating film being the outermost layer of the formed multilayer coating system, to obtain cured first, optionally second, and third coating layers.

Preferably, at least step (3), more preferably also step (1) and optional step (2) is performed via a spray application.

The first, optionally second, and third coating film formed on the optionally pre-coated substrate by performing step (1), optional step (2), and step (3) are at this stage each an uncured coating film. Thus, both the first the optionally second and the third coating compositions are applied wet-on-wet.

The method of the invention is particularly suitable for the coating of automotive vehicle bodies or parts thereof including respective metallic substrates, but also plastic substrates such as polymeric substrates. Consequently, the preferred substrates are automotive vehicle bodies or parts thereof.

Suitability as metallic substrates used in accordance with the invention are all substrates used customarily and known to the skilled person. The substrates used in accordance with the invention are preferably metallic substrates, more preferably selected from the group consisting of steel, preferably steel selected from the group consisting of bare steel, cold rolled steel (CRS), hot rolled steel, galvanized steel such as hot dip galvanized steel (HDG), alloy galvanized steel (such as, for example, Galvalume, Galvannealed or Galfan) and aluminized steel, aluminum and magnesium, and also Zn/Mg alloys and Zn/Ni alloys. Particularly suitable substrates are parts of vehicle bodies or complete bodies of automobiles for production.

Preferably, thermoplastic polymers are used as plastic substrates. Suitable polymers are poly(meth)acrylates including polymethyl(meth)acrylates, polybutyl (meth)acrylates, polyethylene terephthalates, polybutylene terephthalates, polyvinylidene fluorides, polyvinyl chlorides, polyesters, including polycarbonates and polyvinyl acetate, polyamides, polyolefins such as polyethylene, polypropylene, polystyrene, and also polybutadiene, polyacrylonitrile, polyacetal, polyacrylonitrile-ethylene-propylene-diene-styrene copolymers (A-EPDM), ASA (acrylonitrile-styrene-acrylic ester copolymers) and ABS (acrylonitrile-butadiene-styrene copolymers), polyetherimides, phenolic resins, urea resins, melamine resins, alkyd resins, epoxy resins, polyurethanes, including TPU, polyetherketones, polyphenylene sulfides, polyethers, polyvinyl alcohols, and mixtures thereof. Polycarbonates and poly(meth)acrylates are especially preferred.

The substrate used in accordance with the invention is preferably a metallic substrate pretreated with at least one metal phosphate such as zinc phosphate and/or pretreated with at least one an oxalate. A pretreatment of this kind by means of phosphating, which takes place normally after the substrate has been cleaned and before the substrate is electrodeposition-coated, is in particular a pretreatment step that is customary in the automobile industry.

As outlined above the substrate used may be a pre-coated substrate, i.e. a substrate bearing at least one cured coating film. The substrate used in step (1) can be pre-coated with a cured electrodeposition coating layer. The substrate can, e.g., be provided also with at least one cured primer coating film as at least one additional precoat. The term "primer" is known to a person skilled in the art. A primer typically is applied after the substrate has been provided with a cured electrodeposition coating layer. In case a cured primer coating film is also present, the cured electrodeposition coating film is present underneath and preferably adjacent to the cured primer coating film.

Preferably, the inventive method further comprises a step (1a), which is carried out after step (1) and before optional step (2). In said step (1a) the first coating film obtained after step (1) is flashed-off before applying the second coating material composition in optional step (2) preferably for a period of 1 to 20 minutes, more preferably for a period of 2 to 15 minutes, in particular for a period of 5 to 10 minutes. Preferably, step (1a) is performed at a temperature not exceeding 40°C, more preferably at a temperature in the range of from 18 to 30°C.

Preferably, the inventive method further comprises a step (2a), which is carried out after step (2) and before step (3). In said step (2a) the second coating film obtained after step (2) is flashed-off before applying the third coating material composition in step (3) preferably for a period of 1 to 20 minutes, more preferably for a period of 2 to 15 minutes, in particular for a period of 5 to 10 minutes. Preferably, step (2a) is performed at a temperature not exceeding 40°C, more preferably at a temperature in the range of from 18 to 30°C.

Preferably, the inventive method further comprises a step (3a), which is carried out after step (3) and before step (4). In said step (3a) the third coating film obtained after step (3) is flashed-off before performing curing step (4) preferably for a period of 1 to 20 minutes, more preferably for a period of 2 to 15 minutes, in particular for a period of 5 to 10 minutes. Preferably, step (3a) is performed at a temperature not exceeding 40°C, more preferably at a temperature in the range of from 18 to 30°C.

The term "flashing off" in the sense of the present invention preferably means a drying, wherein at least some and/or some amounts of the organic solvents are evaporated from the coating film, before the next coating composition is applied and/or a curing is carried out. No curing is performed by the flashing-off.

In step (4) of the inventive method the first and third coating films and optionally also the second coating film are jointly cured, i.e. are cured together simultaneously. The cured third coating film represents the outermost layer of the formed multilayer coating system obtained after step (4).

Each resulting cured coating film represents a coating layer. Thus, after performing step (4) a first and third and optionally also secomd coating layer are formed on the optionally pre-coated substrate, with the third layer being the outermost layer of the formed multilayer coating system.

Preferably, step (4) is performed at a temperature in a range of from 80 to 180 °C, more preferably in a range of from 100 to 170 °C, even more preferably in a range of from 120 to 160 °C, still more preferably in a range of from 130 to 150 °C, in each case for a period of 5 to 45 minutes, preferably for a period of 10 to 40 minutes, in particular for a period of 12.5 to 35 minutes, most preferably for a period of 15 to 30 minutes.

### Inventive coated substrate

A further subject-matter of the present invention is a coated substrate, which is obtainable by the inventive method.

All preferred embodiments described hereinabove in connection with the inventive coating system and composition and method are also preferred embodiments with regard to the aforementioned inventive coated substrate.

### METHODS

### 1. Non-volatile fraction

The non-volatile fraction (solid fraction, solid content) is determined according to DIN EN ISO 3251:2018-07 at 140°C for 60 min.

### 2. Color value L and color value difference dL after exposure to humidity

Color value L of a coated substrate is determined according to DIN EN ISO 11664-4:2012-06 after its preparation including curing. The color value L of the coated substrate is again determined according to DIN EN ISO 11664-4:2012-06 after having performed a constant climate test for 240 h (condensation water test) according to DIN EN ISO 6270-2:2018-04 and 1 h of subsequent regeneration. The difference between the two measured L values is indicated as dL-value. The color value L is measured at an angle of 45° by making use of the device X-Rite MA 68 II.

### EXAMPLES

The following examples further illustrate the invention.

### 1. Preparation of clearcoat compositions

### 1.1 Inventively used "A"-components 11, 12, 13 as well as comparatively used "A" component C1 for preparing clearcoat compositions

Inventively used "A"-components I1, I2, I3 as well as comparatively used "A" component C1 have been prepared by mixing the constituents listed in Table 1.1a in this order. "pbw" means parts by weight.

**Table 1.1a: "A"-components I1 to I3 and C1**

| *Constituent* | *Amount [pbw] used for C1* | *Amount [pbw] used for I1* | *Amount [pbw] used for 12* | *Amount [pbw] used for 13* |
|---|---|---|---|---|
| Poly(meth)acrylate 1 | 27.90 | 23.80 | 31.10 | 17.30 |
| Poly(meth)acrylate 2 | 29.20 | 29.20 | 30.70 | 26.20 |
| Thixotropic paste TP1 | - | 7.80 | 3.90 | 11.70 |
| Setalux^{®} 81753 SS-55 | 10.00 | 10.00 | 5.00 | 20.00 |
| Catalyst solution | 2.00 | 2.00 | 2.00 | 2.00 |
| Light stabilizer 1 | 2.00 | 2.00 | 2.00 | 2.00 |
| Light stabilizer 2 | 1.60 | 1.60 | 1.60 | 1.60 |
| Solventnaphtha 160/180 | 16.8 | 16.8 | 16.8 | 16.8 |
| Additive 1 | 0.08 | 0.08 | 0.08 | 0.08 |
| Additive 2 | 0.04 | 0.04 | 0.04 | 0.04 |
| Butyl acetate | 10.38 | 6.68 | 6.78 | 2.28 |
| Σ | *100.00* | *100.00* | *100.00* | *100.00* |

Poly(meth)acrylate 1 is an organic solvent(s) containing dispersion containing a (meth)acrylic copolymer having an OH number of about 175 mg KOH/g, an acid number of about 10 mg KOH/g, a calculated glass transition temperature of -15 °C and a weight average molecular weight of about 18 000 g/mol. The dispersion has a solid content of 65 wt.-%. Poly(meth)acrylate 2 is an organic solvent(s) containing dispersion containing a (meth)acrylic copolymer having an OH number of about 185 mg KOH/g, an acid number of about 12 mg KOH/g, a calculated glass transition temperature of +8 °C and a weight average molecular weight of about 8 000 g/mol. The dispersion has a solid content of 65 wt.-%. Thixotropic paste TP1 contains 10.8 parts by weight (pbw) of Aerosil^{®} R 106, which is a commercially available hydrophobic fumed silica, 47.2 pbw of organic solvents and 42.0 pbw of poly(meth)acrylate 1. Setalux^{®} 81753 SS-55 has a solid content of 54-57 wt.-% and contains a (meth)acrylic polyol, which is modified with a urea compound as sag control agent (SCA). The (meth)acrylic polyol contains 4.2 wt.-% OH-groups, based on its total weight. Butyl acetate is present as organic solvent in Setalux^{®} 81753 SS-55. The SCA content present in Setalux^{®} 81753 SS-55 is 2.5 wt.-%, based on the total weight of the product. Light stabilizer 1 is a commercially available substituted benzotriazol. Light stabilizer 2 is a commercially available hindered amine light stabilizer (HALS). Solventnaphtha 160/180 is a commercially available mixture of organic solvents. Additive 1 is a commercially available polyether modified polydimethylsiloxane surface additive. Additive 2 is a commercially available defoamer. Catalyst solution contains an amine and a phosphate ester as well as organic solvents.

**Table 1.1b: relative weight ratio of constituents (a4)/(a5) in "A"-components**

| *"A"-component* | C1 | 11 | *12* | *13* |
|---|---|---|---|---|
| Weight ratio of urea compound to fumed silica within "A"-component | 0 (no fumed silica present) | 1:3.4 | 1:3.4 | 1:2.5 |

### 1.2 Further inventively used "A"-components I4 to 18 for preparing clearcoat compositions

Inventively used "A"-components I4 to I8 have been prepared by mixing the constituents listed in Table 1.2a in this order. "pbw" means parts by weight.

**Table 1.2a: "A"-components I4 to I8**

| *Constituent* | *Amount [pbw] used for I4* | *Amount [pbw] used for I5* | *Amount [pbw] used for I6* | *Amount [pbw] used for I7* | *Amount [pbw] used for I8* |
|---|---|---|---|---|---|
| Poly(meth)acrylate 1 | 17.30 | 23.40 | 17.30 | 23.40 | 17.30 |
| Poly(meth)acrylate 2 | 26.20 | 26.20 | 26.20 | 26.20 | 26.20 |
| Thixotropic paste TP1 | 5.85 | - | - | - | - |
| Thixotropic paste TP2 | 5.85 | 3.90 | 11.70 | 3.90 | 11.70 |
| Setalux^{®} 81753 SS-55 | 20.00 | 20.00 | 20.00 | - | - |
| Setalux^{®} 91756 VS-60 | - | - | - | 20.00 | 20.00 |
| Catalyst solution | 2.00 | 2.00 | 2.00 | 2.00 | 2.00 |
| Light stabilizer 1 | 2.00 | 2.00 | 2.00 | 2.00 | 2.00 |
| Light stabilizer 2 | 1.60 | 1.60 | 1.60 | 1.60 | 1.60 |
| Solventnaphtha 160/180 | 16.80 | 16.80 | 16.80 | 16.80 | 16.80 |
| Additive 1 | 0.08 | 0.08 | 0.08 | 0.08 | 0.08 |
| Additive 2 | 0.04 | 0.04 | 0.04 | 0.04 | 0.04 |
| Butyl acetate | 2.28 | 3.98 | 2.28 | 3.98 | 2.28 |
| Σ | *100.00* | *100.00* | *100.00* | *100.00* | *100.00* |

Thixotropic paste TP2 contains 8.7 parts by weight (pbw) of Aerosil^{®} 380, which is a commercially available hydrophilic fumed silica, 9.3 pbw of organic solvents and 82.0 pbw of poly(meth)acrylate 1. Setalux^{®} 91756 VS-60 has a solid content of 58-61 wt.-% and contains a (meth)acrylic polyol, which is modified with a urea compound sag control agent (SCA). Butyl acetate and solvent naphtha are present as organic solvents in Setalux^{®} 91756 VS-60. The SCA content present in Setalux^{®} 91756 VS-60 is in the range of from 3.3 to 4.0 wt.-%, based on the total weight of this product.

**Table 1.2b: relative weight ratio of constituents (a4)/(a5) in "A"-components**

| *"A" component* | *I4* | *I5* | *I6* | *I7* | *I8* |
|---|---|---|---|---|---|
| Weight ratio of urea compound to fumed silica within "A"-component | 1:2.3 | 1:0.7 | 1:2.0 | 1:0.5 | 1:1.4 |

### 1.3 Further inventively used "A"-components 19 to 113 for preparing clearcoat compositions

Inventively used "A"-components *I9 to I13* have been prepared by mixing the constituents listed in Table 1.3a in this order. "pbw" means parts by weight.

**Table 1.3a: "A"-components I9 to I13**

| *Constituent* | *Amount [pbw] used for I9* | *Amount [pbw] used for I10* | *Amount [pbw] used for I11* | *Amount [pbw] used for I12* | *Amount [pbw] used for I13* |
|---|---|---|---|---|---|
| Poly(meth)acrylate 1 | 17.30 | 31.10 | 23.40 | 17.30 | 21.80 |
| Poly(meth)acrylate 2 | 26.20 | 30.70 | 26.20 | 26.20 | 29.20 |
| Thixotropic paste TP1 | 5.85 | 3.90 | 3.90 | 11.70 | 11.70 |
| Thixotropic paste TP2 | 5.85 | - | - | - | - |
| Setalux^{®} 91756 VS-60 | 20.00 | 5.00 | 20.00 | 20.00 | 10.00 |
| Catalyst solution | 2.00 | 2.00 | 2.00 | 2.00 | 2.00 |
| Light stabilizer 1 | 2.00 | 2.00 | 2.00 | 2.00 | 2.00 |
| Light stabilizer 2 | 1.60 | 1.60 | 1.60 | 1.60 | 1.60 |
| Solventnaphtha 160/180 | 16.8 | 16.8 | 16.8 | 16.8 | 16.8 |
| Additive 1 | 0.08 | 0.08 | 0.08 | 0.08 | 0.08 |
| Additive 2 | 0.04 | 0.04 | 0.04 | 0.04 | 0.04 |
| Butyl acetate | 2.28 | 6.78 | 3.98 | 2.28 | 4.78 |
| Σ | *100.00* | *100.00* | *100.00* | *100.00* | *100.00* |

**Table 1.3b: relative weight ratio of constituents (a4)/(a5) in "A"-components**

| *"A"-component* | *19* | *110* | *111* | *112* | *113* |
|---|---|---|---|---|---|
| Weight ratio of urea compound to fumed silica within "A"-component | 1:1.5 | 1:2.3 | 1:0.6 | 1:1.7 | 1:3.4 |

### 1.4 Preparation of a crosslinker component ("B"-componentB1) for preparing clearcoat compositions

Inventively used "B"-component B1 has been prepared as described hereinafter.

In a reaction vessel, 34.00 parts by weight of hexamethyl 1,6-diisocyanate (HDI) trimer (Desmodur^{®} N3300) and 36.60 parts by weight of butyl acetate are introduced. With reflux cooling, nitrogen blanketing and stirring, a mixture of 0.90 parts by weight of N-[3-(trimethoxysilyl)propyl]butylamine (Dynasylan^{®} 1189)) and 20.00 parts by weight of bis[3-trimethoxysilylpropyl]amine (Dynasylan^{®} 1124) is added dropwise at a rate such that a temperature of 50-60° C is not exceeded. The reaction mixture is stirred until the NCO content, determined by means of titration, has reached the theoretically calculated NCO content by weight. By this procedure, organic constituent (b2) is prepared. Then 8.50 parts by weight of isophorone diisocyanate (IPDI) trimer (Desmodur^{®} Z4470, 70 wt.-% solid content in solvent naphtha) are added. The IPDI trimer represents an organic constituent (b3) bearing on average two or more NCO-groups, wherein none of the NCO-groups have been reacted with any silane. The resulting mixture has an NCO content of 5.9% by weight and a solid content of 60 wt.-%. 30 mol-% of all NCO-groups in total (based on all NCO-groups originally present in HDI and IPDI) are present in silanized form within the polyisocyanate mixture prepared in this manner. This mixture as such is used as "B"-component B1.

### 1.5 Preparation of clearcoat compositions

Each of the "A" components C1, I1 to I4, I6, I10 and I13 was mixed with crosslinker "B" component B1 in a 1:1 weight ratio and the resulting composition was adjusted to about 80 mPas sprayable viscosity. The total solid content of the resulting compositions was in a range of from 53 to 55 wt.-%. In this manner compositions C1B1, I1B1, I2B1, I3B1, I4B1, I6B1, I10B1 and I13B1 were obtained.

### 2. Preparation of multilayer coating systems

### Multilayer coating systems obtained by making use of the clearcoat compositions

A steel panel pretreated with the commercially available product Gardobond^{®} 26S 6800 OC was dipped into a bath containing a commercially available electrodeposition coating composition (Cathoguard^{®} 800). Then, the coated substrate was baked for 15 minutes at 175 °C (dry film thickness: 20 µm). Then, two different aqueous basecoat compositions were spray-applied subsequently wet-on-wet onto the cured electrodeposition coat, namely a dark grey basecoat 1 and a black basecoat 2. Between applying the two basecoats a flash-off period at 23°C was performed for 2 minutes. The two basecoats were applied such that a dry film thickness of 18-20 µm of the first basecoat and a dry film thickness of 12-14 µm of the second basecoat resulted. After application of the second basecoat the resulting basecoats were dried for 5 minutes at 70 °C. Then, clearcoat composition C1B1 was applied such that the resulting dry film thickness of the clearcoat layer was 45-50 µm. Then curing of all coats at 140°C for 20 minutes was performed.

The same procedure was performed for further coated steel panels with the exception that not clearcoat composition C1B1 but instead each of clearcoat compositions I1B1, I2B1, I3B1, I4B1, I6B1, I10B1 and I13B1 was used.

### 3. Properties of the substrates coated with the multilayer coating systems

For a number of the substrates coated with a multilayer coating system, namely for the substrates bearing a clearcoat layer derived from the clearcoat compositions C1B1, I1B1, I2B1, I3B1, I4B1, I6B1, I10B1 and I13B1, color value L was determined according to the method disclosed in the "Methods" section after three days of aging of the coated substrates. Then, the coated substrates were subjected to a constant climate test for 240 h (condensation water test) according to DIN EN ISO 6270-2:2018-04. After 1 h of regeneration, the color value L of the coated substrates was again measured. The difference in the color values measured before and after performance of the condensation water test for each coated substrate is indicated hereinafter as dL-value. The results are summarized in Table 2. The lesser the dL-value the lesser is the occurrence of an undesired whitening.

The measured dL-values are classified via the following grade system:

| | |
|---|---|
| dL in the range of from 0 to 0.2 | = 1 (excellent) |
| dL in the range of from >0.2 to 0.5 | = 2 (good) |
| dL in the range of from >0.5 to 0.6 | = 3 (acceptable) |
| dL of from >0.6 | = 4 (insufficient) |

**Table 2: dL-values of a number of coated substrates**

| *Multilayer coating system comprising a clearcoat layer derived from:* | *dL-values [grade]* |
|---|---|
| C1B1 | 4 |
| I1B1 | 1 |
| I2B1 | 1 |
| I3B1 | 1 |
| I4B1 | 1 |
| I6B1 | 2 |
| I10B1 | 1 |
| I13B1 | 1 |

## Claims

1. A clearcoat system comprising at least two components (A) and (B) and optionally at least one further component (C) being different from one another and being separate from each other,
wherein component (A) comprises at least constituents (a1) to (a3), which are different from one another, namely
at least one organic solvent (a1),
at least one OH-functional polymer (a2), and
at least one at least one ether segment containing polysiloxane (a3),
wherein component (B) comprises at least two constituents (b1) and (b2), which are different from one another, namely
at least one organic solvent (b1), and
at least one organic constituent (b2) bearing on average two or more NCO-groups, wherein at least a part of these NCO-groups has been reacted with at least one silane prior to incorporation of constituent (b2) into component (B), and
wherein optional component (C) is a reducer component and comprises at least one organic solvent (c1),
wherein component (A) further comprises at least one constituent (a4) and at least one constituent (a5), which are different from one another and from any of constituents (a1) to (a3), (b1) and (b2), namely
at least one urea moiety or moieties containing constituent (a4), which is an adduct of at least at least one diisocyanate and/or polyisocyanate and at least one monoamine, and at least one kind of fumed silica as constituent (a5), **characterized in that** the relative weight ratio of constituents (a4) and (a5) to each other within component (A) is in a range of from 1.0:0.1 to 1.0:<5.0.

2. The clearcoat system according to claim 1, **characterized in that**
constituent (a4) is present in component (A) in an amount in the range of from 0.10 to 10.0 wt.-%, preferably of from 0.10 to 8.0 wt.-%, more preferably of from 0.1 to 7.0 wt.-%, even more preferably of from 0.10 to 5.0 wt.-%, still more preferably of from 0.10 to 4.0 wt.-%, yet more preferably of from 0.10 to 3.0 wt.- %, based in each case on the total weight of component (A), and/or **in that**
constituent (a5) is present in component (A) in an amount in the range of from 0.10 to 10.0 wt.-%, preferably of from 0.20 to 8.0 wt.-%, more preferably of from 0.20 to 7.0 wt.-%, even more preferably of from >0.20 to 5.0 wt.-%, still more preferably of from 0.25 to 4.0 wt.-%, yet more preferably of from 0.3 to 3.0 wt.- %, based in each case on the total weight of component (A).

3. The clearcoat system according to claim 1 or 2, **characterized in that**
constituent (a4) is prepared by adding the at least one diisocyanate and/or polyisocyanate, preferably the at least one diisocyanate, to a mixture of the at least one monoamine in the presence of at least one OH-functional polymer, preferably of at least one OH-functional (meth)acrylic copolymer, which can be identical to or different from the at least one OH-functional polymer (a2), and/or in that
the at least one kind of fumed silica used as constituent (a5) is selected from the group consisting of hydrophilic and hydrophobic fumed silica and mixtures thereof, preferably is selected from the group consisting of hydrophobic fumed silica, in particular in combination with combination with a urea moiety or moieties containing constituent (a4), which is an adduct of a polyisocyanate and/or diisocyanate and methoxypropylamine.

4. The clearcoat system according to one or more of the preceding claims, **characterized in that** the relative weight ratio of constituents (a4) and (a5) to each other within component (A) is in a range of from 1.0:0.2 to 1.0:<5.0, preferably of from 1.0:0.4 to 1.0:<5.0, more preferably of from 1.0:0.5 to 1.0:<5.0, yet more preferably of from 1.0:0.7 to 1.0:<5.0, even more preferably of from 1.0:0.9 to 1.0:<5.0, yet more preferably of from 1.0:1.0 to 1.0:<5.0, still more preferably of from 1.0:1.1 to 1.0:<5.0, yet more preferably of from 1.0:1.5 to 1.0:<5.0, even more preferably of from 1.0:1.7 to 1.0:<5.0, still more preferably of from 1.0:1.8 to 1.0:<5.0, yet more preferably of from 1.0:2.0 to 1.0:<5.0, in particular of from 1.0:2.2 to 1.0:<5.0, most preferably of from 1.0:2.2 to 1.0:4.8 or of from 1.0:2.2 to 1.0:4.5 or of from 1.0:2.2 to 1.0:4.0 or of from 1.0:2.2 to 1.0:3.8.

5. The clearcoat system according to one or more of the preceding claims, **characterized in that** at least one constituent (b2) bears at least one structural unit of the formula (1)
-NR-(X-SiR"ₓ(OR')₃₋ₓ) (I),
and/or, preferably and, at least one structural unit of the formula (II)
-N(X-SiR"ₓ(OR')₃₋ₓ)ₙ(X'-SiR"_{y}(OR')_{3-y})ₘ (II),
wherein:
R = hydrogen, alkyl, cycloalkyl, aryl or aralkyl, it being possible for the carbon chain to be interrupted by nonadjacent oxygen, sulfur or NR^{a} groups, where R^{a} = alkyl, cycloalkyl, aryl or aralkyl,
each R' = independently of one another hydrogen, alkyl or cycloalkyl, it being possible for the carbon chain to be interrupted by nonadjacent oxygen, sulfur or NR^{a} groups, preferably wherein each R' = ethyl and/or methyl,
each X,X' = independently of one another linear and/or branched alkylene or cycloalkylene radical having 1 to 20 carbon atoms, preferably wherein each X,X' = alkylene radical having 1 to 4 carbon atoms,
each R" = independently of one another alkyl, cycloalkyl, aryl or aralkyl, it being possible for the carbon chain to be interrupted by nonadjacent oxygen, sulfur or NR^{a} groups, preferably wherein each R" = alkyl radical, more particularly having 1 to 6 C atoms,
n = parameter of 0 to 2, m = parameter of 0 to 2, m+n = 2, and x, y = parameter of 0 to 2.

6. The clearcoat system according to one or more of the preceding claims, **characterized in that** between 10 and 80 mol-%, preferably between 15 and 70 mol-%, more preferably between 20 and 50 mol-% and still more preferably between 25 and 40 mol-% of the isocyanate groups originally present in at least one constituent (b2) have undergone reaction with the at least one silane, preferably to form structural units (I) and/or (II), preferably to form structural units (I) and (II), as defined in claim 5.

7. The clearcoat system according to one or more of the preceding claims, **characterized in that** the at least one OH-functional polymer (a2) is at least one OH-functional (meth)acrylic copolymer and/or at least one OH-functional polyester, preferably at least one OH-functional (meth)acrylic copolymer, more preferably at least two OH-functional (meth)acrylic copolymer being different from one another.

8. The clearcoat system according to one or more of the preceding claims, **characterized in that** the at least one ether segment containing polysiloxane (a3) is a polydialkylsiloxane, preferably a polymethylalkylsiloxane with alkyl ≠ methyl, containing ether segment(s) -[O-R]ₙ-, with n being a parameter in the range of from 1 to 1000, and each R being independently of one another an ethylene, propylene and/or butylene residue polysiloxane, preferably being present in an amount in the range of from 0.01 to 2.5 wt.-%, based on the total weight of component (A).

9. The clearcoat system according to one or more of the preceding claims, **characterized in that** component (B) comprises at least one organic constituent (b3) bearing on average two or more NCO-groups, which is different from constituent (b2) and does not contain any silane modified NCO-groups, which preferably has a cycloaliphatic parent structure and/or a parent structure that is derived from a cycloaliphatic polyisocyanate by trimerization, dimerization, urethane formation, biuret formation, uretdione formation and/or allophanate formation.

10. The clearcoat system according to one or more of the preceding claims, **characterized in that** component (A) comprises at least one catalyst (a7) for crosslinking of silane groups.

11. A solventborne clearcoat composition obtainable by mixing at least components (A) and (B) and optionally (C) of the coating system according to one or more of claims 1 to 10 with each other.

12. The clearcoat composition according to claim 11, **characterized in that** it is obtainable by mixing components (A) and (B) in a weight ratio (component (A)/component (B)) in a range of from 3:1 to 1:3, more preferably in a range of from 2.5:1 to 1:2.5, still more preferably in a range of from 2:1 to 1:1.2, yet more preferably in a weight ratio in a range of from 1.5:1 to 1:1.2, in particular in a range of from 1.2:1 to 1:1.2.

13. A method of coating a substrate, comprising at least one step of applying to an optionally pre-coated substrate at least one clearcoat composition according to claim 11 or 12 to form at least one coating film onto the optionally pre-coated substrate and optionally at least one further step of curing the at least one coating film to obtain at least one cured coating layer onto the substrate.

14. The method according to claim 13, **characterized in that** it is a method of preparing a multilayer coating system onto an optionally pre-coated substrate comprising at least steps (1), (3), and (4), and optionally (2), namely
(1) applying a first basecoat composition to an optionally pre-coated substrate and forming an first coating film on the optionally pre-coated substrate,
(2) optionally applying a second basecoat composition to the first coating film present on the substrate obtained after step (1) prior to curing the first coating film and forming a second coating film adjacent to the first coating film,
(3) applying a third coating composition to the first coating film present on the substrate obtained after step (1) prior to curing the first coating film and forming a third coating film adjacent to the first coating film in case optional step (2) is not performed or applying a third coating composition to the second coating film present on the substrate obtained after step (2) prior to curing the second coating film and forming a third coating film adjacent to the second coating film in case optional step (2) is performed,
wherein the third coating composition is a clearcoat composition according to claim 11 or 12, and
(4) jointly curing the first and third and optionally second coating films, the cured third coating film being the outermost layer of the formed multilayer coating system, to obtain cured first, optionally second, and third coating layers.

15. A coated substrate, which is obtainable by the method according to claim 13 or 14.

## Patentansprüche

1. Klarlackaufbau, umfassend mindestens zwei Komponenten (A) und (B) und gegebenenfalls mindestens eine weitere Komponente (C), die voneinander verschieden und voneinander getrennt sind,
wobei Komponente (A) mindestens Bestandteile (a1) bis (a3) umfasst, die voneinander verschieden sind, nämlich mindestens ein organisches Lösungsmittel (a1), mindestens ein OH-funktionelles Polymer (a2) und mindestens ein mindestens ein Ethersegment enthaltendes Polysiloxan (a3),
wobei Komponente (B) mindestens zwei Bestandteile (b1) und (b2) umfasst, die voneinander verschieden sind, nämlich
mindestens ein organisches Lösungsmittel (b1) und mindestens einen organischen Bestandteil (b2), der im Mittel zwei oder mehr NCO-Gruppen trägt, wobei wenigstens ein Teil dieser NCO-Gruppen vor dem Einbau von Bestandteil (b2) in Komponente (B) mit mindestens einem Silan umgesetzt wurde, und
wobei die ggf. vorhandene Komponente (C) eine Reduziererkomponente ist und mindestens ein organisches Lösungsmittel (c1) umfasst,
wobei Komponente (A) ferner mindestens einen Bestandteil (a4) und mindestens einen Bestandteil (a5) umfasst, die voneinander und von einem der Bestandteile (a1) bis (a3), (b1) und (b2) verschieden sind, nämlich
mindestens eine Harnstoffgruppierung oder Harnstoffgruppierungen, die Bestandteil (a4) enthält bzw. enthalten, bei dem es sich um ein Addukt mindestens mindestens eines Diisocyanats und/oder Polyisocyanats und mindestens eines Monoamins handelt, und mindestens eine Art pyrogene Kieselsäure als Bestandteil (a5), **dadurch gekennzeichnet, dass** das relative Gewichtsverhältnis der Bestandteile (a4) und (a5) zueinander in Komponente (A) in einem Bereich von 1,0:0,1 bis 1,0:<5,0 liegt.

2. Klarlackaufbau nach Anspruch 1, **dadurch gekennzeichnet, dass**
Bestandteil (a4) in Komponente (A) in einer Menge im Bereich von 0,10 bis 10,0 Gew.-%, bevorzugt von 0,10 bis 8,0 Gew.-%, bevorzugter von 0,1 bis 7,0 Gew.-%, noch bevorzugter von 0,10 bis 5,0 Gew.-%, noch weiter bevorzugt von 0,10 bis 4,0 Gew.-%, noch mehr bevorzugt von 0,10 bis 3,0 Gew.-%, jeweils bezogen auf das Gesamtgewicht von Komponente (A), vorliegt und/oder dass Bestandteil (a5) in Komponente (A) in einer Menge im Bereich von 0,10 bis 10,0 Gew.-%, bevorzugt von 0,20 bis 8,0 Gew.-%, bevorzugter von 0,20 bis 7,0 Gew.-%, noch bevorzugter von >0,20 bis 5,0 Gew.-%, noch weiter bevorzugt von 0,25 bis 4,0 Gew.-%, noch mehr bevorzugt von 0,3 bis 3,0 Gew.-%, jeweils bezogen auf das Gesamtgewicht von Komponente (A), vorliegt.

3. Klarlackaufbau nach Anspruch 1 oder 2, **dadurch gekennzeichnet, dass**
Bestandteil (a4) hergestellt wird, indem man das mindestens eine Diisocyanat und/oder Polyisocyanat, vorzugsweise das mindestens eine Diisocyanat, in Gegenwart mindestens eines OH-funktionellen Polymers, vorzugsweise mindestens eines OH-funktionellen (Meth)acryl-Copolymers, das gleich oder verschieden von dem mindestens einen OH-funktionellen Polymer (a2) sein kann, zu einer Mischung des mindestens einen Monoamins gibt, und/oder dass
die als Bestandteil (a5) verwendete mindestens eine Art pyrogene Kieselsäure aus der Gruppe bestehend aus hydrophiler und hydrophober pyrogener Kieselsäure und Mischungen davon ausgewählt ist, bevorzugt aus der Gruppe bestehend aus hydrophober pyrogener Kieselsäure ausgewählt ist, insbesondere in Kombination mit einer Harnstoffgruppierung oder Harnstoffgruppierungen, die Bestandteil (a4) enthält bzw. enthalten, bei dem es sich um ein Addukt eines Polyisocyanats und/oder Diisocyanats und von Methoxypropylamin handelt.

4. Klarlackaufbau nach einem oder mehreren der vorhergehenden Ansprüche, **dadurch gekennzeichnet, dass** das relative Gewichtsverhältnis der Bestandteile (a4) und (a5) zueinander in Komponente (A) in einem Bereich von 1,0:0,2 bis 1,0:<5,0, bevorzugt von 1,0:0.4 bis 1,0:<5,0, bevorzugter von 1,0:0,5 bis 1,0:<5,0, noch mehr bevorzugt von 1,0:0,7 bis 1,0:<5,0, noch bevorzugter von 1,0:0,9 bis 1,0:<5,0, noch mehr bevorzugt von 1,0:1,0 bis 1,0:<5,0, noch weiter bevorzugt von 1,0:1,1 bis 1,0:<5,0, noch mehr bevorzugt von 1,0:1,5 bis 1,0:<5,0, noch bevorzugter von 1,0:1,7 bis 1,0:<5,0, noch weiter bevorzugt von 1,0:1,8 bis 1,0:<5,0, noch mehr bevorzugt von 1,0:2,0 bis 1,0:<5,0, insbesondere von 1,0:2,2 bis 1,0:<5,0, am meisten bevorzugt von 1,0:2,2 bis 1,0:4,8 oder von 1,0:2,2 bis 1,0:4,5 oder von 1,0:2,2 bis 1,0:4,0 oder von 1,0:2,2 bis 1,0:3,8 liegt.

5. Klarlackaufbau nach einem oder mehreren der vorhergehenden Ansprüche, **dadurch gekennzeichnet, dass** mindestens ein Bestandteil (b2) mindestens eine Struktureinheit der Formel (I)
-NR- X-SiR"ₓ(OR') ₃₋ₓ) (I)
und/oder vorzugsweise und mindestens eine Struktureinheit der Formel (II)
-N(X-SiR"ₓ(OR') ₃₋ₓ)ₙ(X'-SiR"_{y}(OR')_{3-y})ₘ (II) trägt, wobei:
R = Wasserstoff, Alkyl, Cycloalkyl, Aryl oder Aralkyl ist, wobei die Kohlenstoffkette durch nicht benachbarte Sauerstoff-, Schwefel- oder NR^{a}-Gruppen unterbrochen sein kann, wobei R^{a} = Alkyl, Cycloalkyl, Aryl oder Aralkyl ist,
R' jeweils unabhängig voneinander = Wasserstoff, Alkyl oder Cycloalkyl ist, wobei die Kohlenstoffkette durch nicht benachbarte Sauerstoff-, Schwefel- oder NR^{a}-Gruppen unterbrochen sein kann, wobei vorzugsweise R' jeweils = Ethyl und/oder Methyl ist,
X,X' jeweils unabhängig voneinander = lineare und/oder verzweigte Alkylen- oder Cycloalkylenreste mit 1 bis 20 Kohlenstoffatomen sind, wobei vorzugsweise X,X' jeweils = Alkylenreste mit 1 bis 4 Kohlenstoffatomen sind,
R'' jeweils unabhängig voneinander = Alkyl, Cycloalkyl, Aryl oder Aralkyl ist, wobei die Kohlenstoffkette durch nicht benachbarte Sauerstoff-, Schwefel- oder NR^{a}-Gruppen unterbrochen sein kann, wobei vorzugsweise R" jeweils = Alkylreste, insbesondere mit 1 bis 6 C-Atomen, ist,
n = Parameter von 0 bis 2, m = Parameter von 0 bis 2, m+n = 2 und x, y = Parameter von 0 bis 2 ist.

6. Klarlackaufbau nach einem oder mehreren der vorhergehenden Ansprüche, **dadurch gekennzeichnet, dass** zwischen 10 und 80 Mol-%, bevorzugt zwischen 15 und 70 Mol-%, bevorzugter zwischen 20 und 50 Mol-% und noch mehr bevorzugt zwischen 25 und 40 Mol-% der ursprünglich in mindestens einem Bestandteil (b2) vorhandenen Isocyanatgruppen mit dem mindestens einen Silan bevorzugt zu Struktureinheiten (I) und/oder (II), bevorzugt zu Struktureinheiten (I) und (II), wie in Anspruch 5 definiert, umgesetzt sind.

7. Klarlackaufbau nach einem oder mehreren der vorhergehenden Ansprüche, **dadurch gekennzeichnet, dass** es sich bei dem mindestens einen OH-funktionellen Polymer (a2) um mindestens ein OH-funktionelles (Meth)acrylCopolymer und/oder mindestens einen OH-funktionellen Polyester, bevorzugt mindestens ein OH-funktionelles (Meth)acryl-Copolymer, bevorzugter mindestens zwei OHfunktionelle (Meth)acryl-Copolymere, die voneinander verschieden sind, handelt.

8. Klarlackaufbau nach einem oder mehreren der vorhergehenden Ansprüche, **dadurch gekennzeichnet, dass** es sich bei dem mindestens ein Ethersegment enthaltenden Polysiloxan (a3) um ein Polydialkylsiloxan, bevorzugt ein Polymethylalkylsiloxan mit Alkyl ≠ Methyl, das Ethersegment(e) -[O-R]ₙ- enthält, wobei n ein Parameter im Bereich von 1 bis 1000 ist und R jeweils unabhängig voneinander Ethylen-, Propylen- und/oder Butylenrest-Polysiloxane sind, handelt, das vorzugsweise in einer Menge im Bereich von 0,01 bis 2,5 Gew.-%, bezogen auf das Gesamtgewicht von Komponente (A), vorliegt.

9. Klarlackaufbau nach einem oder mehreren der vorhergehenden Ansprüche, **dadurch gekennzeichnet, dass** Komponente (B) mindestens einen organischen Bestandteil (b3) umfasst, der im Mittel zwei oder mehr NCO-Gruppen trägt, der von Bestandteil (b2) verschieden ist und keine silanmodifizierten NCO-Gruppen enthält, der vorzugsweise eine cycloaliphatische Grundstruktur und/oder eine Grundstruktur, die sich von einem cycloaliphatischen Polyisocyanat durch Trimerisierung, Dimerisierung, Urethanbildung, Biuretbildung, Uretdionbildung und/Allophanatbildung ableitet, aufweist.

10. Klarlackaufbau nach einem oder mehreren der vorhergehenden Ansprüche, **dadurch gekennzeichnet, dass** Komponente (A) mindestens einen Katalysator (a7) zur Vernetzung von Silangruppen umfasst.

11. Lösemittelhaltige Klarlackzusammensetzung, erhältlich durch Mischen von wenigstens Komponenten (A) und (B) und gegebenenfalls (C) des Lackaufbaus nach einem oder mehreren der Ansprüche 1 bis 10 miteinander.

12. Klarlackzusammensetzung nach Anspruch 11, **dadurch gekennzeichnet, dass** sie durch Mischen von Komponenten (A) und (B) in einem Gewichtsverhältnis (Komponente (A)/Komponente (B)) in einem Bereich von 3:1 bis 1:3, bevorzugter in einem Bereich von 2,5:1 bis 1:2,5, noch mehr bevorzugt in einem Bereich von 2:1 bis 1:1,2, noch weiter bevorzugt in einem Gewichtsverhältnis in einem Bereich von 1,5:1 bis 1:1,2, insbesondere in einem Bereich von 1,2:1 bis 1:1,2, erhältlich ist.

13. Verfahren zur Lackierung eines Substrats, umfassend mindestens einen Schritt des Auftragens mindestens einer Klarlackzusammensetzung nach Anspruch 11 oder 12 auf ein gegebenenfalls vorlackiertes Substrat, so dass mindestens ein Lackfilm auf das gegebenenfalls vorlackierte Substrat aufgebaut wird, und gegebenenfalls mindestens einen weiteren Schritt des Härtens des mindestens einen Lackfilms, so dass mindestens eine gehärtete Lackschicht auf das Substrat aufgebracht wird.

14. Verfahren nach Anspruch 13, **dadurch gekennzeichnet, dass** es sich um ein Verfahren zur Herstellung eines mehrschichtigen Lackaufbaus auf ein gegebenenfalls vorlackiertes Substrat handelt, das mindestens die Schritte (1), (3) und (4) und gegebenenfalls (2) umfasst, nämlich
(1) Auftragen einer ersten Basislackzusammensetzung auf ein gegebenenfalls vorlackiertes Substrat und Bilden eines ersten Lackfilms auf dem gegebenenfalls vorlackierten Substrat,
(2) gegebenenfalls Auftragen einer zweiten Basislackzusammensetzung auf den auf dem nach Schritt (1) erhaltenen Substrat vorhandenen ersten Lackfilm vor dem Härten des ersten Lackfilms und Bilden eines an den ersten Lackfilm grenzenden zweiten Lackfilms,
(3) Auftragen einer dritten Lackzusammensetzung auf den auf dem nach Schritt (1) erhaltenen Substrat vorhandenen ersten Lackfilm vor dem Härten des ersten Lackfilms und Bilden eines an den ersten Lackfilm grenzenden dritten Lackfilms, falls der gegebenenfalls vorhandene Schritt (2) nicht ausgeführt wird, oder Auftragen einer dritten Lackzusammensetzung auf den auf dem nach Schritt (2) erhaltenen Substrat vorhandenen zweiten Lackfilm vor dem Härten des zweiten Lackfilms und Bilden eines an den zweiten Lackfilm grenzenden dritten Lackfilms, falls der gegebenenfalls vorhandene Schritt (2) ausgeführt wird, wobei es sich bei der dritten Lackzusammensetzung um eine Klarlackzusammensetzung nach Anspruch 11 oder 12 handelt, und
(4) gemeinsames Härten des ersten und dritten und gegebenenfalls zweiten Lackfilms, wobei der gehärtete dritte Lackfilm die äußerste Schicht des gebildeten mehrschichtigen Lackaufbaus ist, unter Erhalt einer ersten, gegebenenfalls einer zweiten sowie einer dritten jeweils gehärteten Lackschicht.

15. Lackiertes Substrat, das mit dem Verfahren nach Anspruch 13 oder 14 erhältlich ist.

## Revendications

1. Système de revêtement transparent comprenant au moins deux composants (A) et (B) et éventuellement au moins un autre composant (C) qui sont différents les uns des autres et qui sont séparés les uns des autres,
dans lequel le composant (A) comprend au moins des constituants (a1) à (a3), qui sont différents les uns des autres, à savoir
au moins un solvant organique (a1),
au moins un polymère fonctionnalisé par OH (a2), et
au moins un segment éther contenant un polysiloxane (a3), dans lequel le composant (B) comprend au moins deux constituants (b1) et (b2), qui sont différents l'un de l'autre, à savoir
au moins un solvant organique (b1), et
au moins un constituant organique (b2) portant en moyenne deux groupes NCO ou plus, au moins une partie de ces groupes NCO ayant été mis à réagir avec au moins un silane avant l'incorporation du constituant (b2) dans le composant (B), et
dans lequel le composant éventuel (C) est un composant réducteur et comprend au moins un solvant organique (c1), dans lequel le composant (A) comprend en outre au moins un constituant (a4) et au moins un constituant (a5), qui sont différents l'un de l'autre et de tous les constituants (a1) à (a3), (b1) et (b2), à savoir au moins un constituant contenant un groupement ou des groupements urée (a4), qui est un adduit d'au moins un diisocyanate et/ou polyisocyanate et d'au moins une monoamine, et au moins une sorte de silice fumée en tant que constituant (a5), **caractérisé en ce que** le rapport pondéral relatif des constituants (a4) et (a5) l'un par rapport à l'autre dans le constituant (A) est dans une plage allant de 1,0:0,1 à 1,0 :<5,0.

2. Système de revêtement transparent selon la revendication 1, **caractérisé en ce que**
le constituant (a4) est présent dans le composant (A) en une quantité dans la plage allant de 0,10 à 10,0 % en poids, de préférence de 0,10 à 8,0 % en poids, plus préférablement de 0,1 à 7,0 % en poids, encore plus préférablement de 0,10 à 5,0 % en poids, encore plus préférablement de 0,10 à 4,0 % en poids, encore plus préférablement de 0,10 à 3,0 % en poids, sur la base en chaque cas du poids total de composant (A), et/ou **en ce que**
le constituant (a5) est présent dans le composant (A) en une quantité dans la plage allant de 0,10 à 10,0 % en poids, de préférence de 0,20 à 8,0 % en poids, plus préférablement de 0,20 à 7,0 % en poids, encore plus préférablement de > 0,20 à 5,0 % en poids, encore plus préférablement de 0,25 à 4,0 % en poids, encore plus préférablement de 0,3 à 3,0 % en poids, sur la base en chaque cas du poids total de composant (A).

3. Système de revêtement transparent selon la revendication 1 ou 2, **caractérisé en ce que** le constituant (a4) est préparé en ajoutant l'au moins un diisocyanate et/ou polyisocyanate, de préférence l'au moins un diisocyanate, à un mélange de l'au moins une monoamine en présence d'au moins un polymère fonctionnalisé par OH, de préférence d'au moins un copolymère (méth)acrylique fonctionnalisé par OH, qui peut être identique ou différent de l'au moins un polymère fonctionnalisé par OH (a2), et/ou **en ce que** l'au moins une sorte de silice fumée utilisée comme constituant (a5) est choisie dans le groupe constitué par la silice fumée hydrophile et hydrophobe et leurs mélanges, de préférence est choisie dans le groupe constitué par la silice fumée hydrophobe, en particulier en combinaison avec le constituant contenant un groupement ou des groupements urée (a4), qui est un adduit d'un polyisocyanate et/ou diisocyanate et de méthoxypropylamine.

4. Système de revêtement transparent selon l'une ou plusieurs des revendications précédentes, **caractérisé en ce que** le rapport pondéral relatif des constituants (a4) et (a5) l'un à par rapport l'autre dans le composant (A) est dans une plage allant de 1,0:0,2 à 1,0:<5,0, de préférence de 1,0:0,4 à 1,0:<5,0, plus préférablement de 1,0:0,5 à 1,0:<5,0, encore plus préférablement de 1,0:0,7 à 1,0:<5,0, encore plus préférablement de 1,0:0,9 à 1,0:<5,0, encore plus préférablement de 1,0:1,0 à 1,0:<5,0, encore plus préférablement de 1,0:1,1 à 1,0:<5,0, encore plus préférablement de 1,0:1,5 à 1,0:<5,0, encore plus préférablement de 1,0:17 à 1,0:<5,0, encore plus préférablement de 1,0:1,8 à 1,0:<5,0, encore plus préférablement de 1,0:2,0 à 1,0:<5,0, en particulier de 1,0:2,2 à 1,0:<5,0, le plus préférablement de 1,0:2,2 à 1,0:4,8 ou de 1,0:2,2 à 1,0:4,5 ou de 1,0:2,2 à 1,0:4,0 ou de 1,0:2,2 à 1,0:3,8.

5. Système de revêtement transparent selon une ou plusieurs des revendications précédentes, **caractérisé en ce qu'**au moins un constituant (b2) porte au moins un motif structural de formule (I)
-NR- (X-SiR"ₓ(OR")₃₋ₓ) (I),
et/ou, de préférence et, au moins un motif structural de formule (II)
-N(X-SiR"ₓ(OR')₃₋ₓ)ₙ(X'-SiR"_{y}(OR')_{3-y})ₘ (II),
dans lequel :
R = hydrogène, alkyle, cycloalkyle, aryle ou aralkyle, la chaine carbonée pouvant être interrompue par des groupes oxygène, soufre, NR^{a} non adjacents, où R^{a} = alkyle, cycloalkyle, aryle ou aralkyle,
chaque R' = indépendamment l'un de l'autre hydrogène, alkyle ou cycloalkyle, la chaîne carbonée pouvant être interrompue par des groupes oxygène, soufre ou NR^{a} non adjacents, de préférence dans lequel chaque R' = éthyle et/ou méthyle,
chaque X,X' = indépendamment l'un de l'autre radical alkylène linéaire et/ou ramifié ou cycloalkylène ayant 1 à 20 atomes de carbone, de préférence dans lequel chaque X,X' = radical alkylène ayant 1 à 4 atomes de carbone,
chaque R" = indépendamment l'un de l'autre alkyle, cycloalkyle, aryle ou aralkyle, la chaîne carbonée pouvant être interrompue par des groupements oxygène,
soufre ou NR^{a} non adjacents, de préférence dans lequel chaque R'' = radical alkyle, plus particulièrement ayant 1 à 6 atomes de C,
n = paramètre de 0 à 2, m = paramètre de 0 à 2, m+n = 2, et x, y = paramètre de 0 à 2.

6. Système de revêtement transparent selon l'une ou plusieurs des revendications précédentes, **caractérisé en ce qu'**entre 10 et 80 % en moles, de préférence entre 15 et 70 % en moles, de préférence encore entre 20 et 50 % en moles et encore mieux entre 25 et 40 % en moles des groupes isocyanate présents initialement dans au moins un constituant (b2) ont subi une réaction avec l'au moins un silane, de préférence pour former des motifs structuraux (I) et/ou (II), de préférence pour former des motifs structuraux (I) et (II), tels que définis dans la revendication 5.

7. Système de revêtement transparent selon une ou plusieurs des revendications précédentes, **caractérisé en ce que** le polymère fonctionnalisé par OH (a2) est au moins un copolymère (méth)acrylique fonctionnalisé par OH et/ou au moins un polyester fonctionnalisé par OH, de préférence au moins un copolymère (méth)acrylique fonctionnalisé par OH, plus préférablement au moins deux copolymères (méth)acryliques fonctionnalisés par OH qui sont différents l'un de l'autre.

8. Système de revêtement transparent selon l'une ou plusieurs des revendications précédentes, **caractérisé en ce que** l'au moins un segment éther contenant un polysiloxane (a3) est un polydialkylsiloxane, de préférence un polyméthylalkylsiloxane où alkyle ≠ méthyle, contenant un ou plusieurs segment(s) éther -[OR]ₙ-, n étant un paramètre dans la plage de 1 à 1 000, et chaque R étant indépendamment l'un de l'autre un polysiloxane à radical éthylène, propylène et/ou butylène, qui est préférablement présent en une quantité dans la plage de 0,01 à 2,5 % en poids, sur la base du poids total du composant (A).

9. Système de revêtement transparent selon l'une ou plusieurs des revendications précédentes, **caractérisé en ce que** le composant (B) comprend au moins un constituant organique (b3) portant en moyenne deux ou groupes NCO ou plus, qui est différent du constituant (b2) et ne contient pas de quelconques groupes NCO modifiés par un silane, qui présente de préférence une structure mère cycloaliphatique et/ou une structure mère dérivée d'un polyisocyanate cycloaliphatique par trimérisation, dimérisation, formation d'uréthane, formation de biuret, formation d'uretdione et/ou formation d'allophanate.

10. Système de revêtement transparent selon une ou plusieurs des revendications précédentes, **caractérisé en ce que** le composant (A) comprend au moins un catalyseur (a7) pour la réticulation de groupes silane.

11. Composition de revêtement transparent à base de solvant, pouvant être obtenue par mélange d'au moins les composants (A) et (B) et éventuellement (C) du système de revêtement selon une ou plusieurs des revendications 1 à 10 les uns avec les autres.

12. Composition de revêtement transparent selon la revendication 11, **caractérisée en ce qu'**elle peut être obtenue par mélange des composants (A) et (B) en un rapport pondéral (composant (A)/composant (B)) dans une plage de 3:1 à 1:3, de préférence encore dans une plage de 2,5:1 à 1:2,5, encore mieux dans une plage de 2:1 à 1:1,2, encore plus préférablement dans un rapport pondéral dans une plage de 1,5:1 à 1:1,2, en particulier dans une plage de 1,2:1 à 1:1,2.

13. Procédé de revêtement d'un substrat, comprenant au moins une étape d'application sur un substrat éventuellement pré-revêtu d'au moins une composition de revêtement transparent selon la revendication 11 ou 12 pour former au moins un film de revêtement sur le substrat éventuellement pré-revêtu et éventuellement au moins une étape supplémentaire de durcissement de l'au moins un film de revêtement pour obtenir au moins une couche de revêtement durcie sur le substrat.

14. Procédé selon la revendication 13, **caractérisé en ce qu'**il s'agit d'un procédé de préparation d'un système de revêtement multicouche sur un substrat éventuellement pré-revêtu comprenant au moins les étapes (1), (3) et (4), et éventuellement (2), à savoir
(1) application d'une première composition de revêtement de base sur un substrat éventuellement pré-revêtu et formation d'un premier film de revêtement sur le substrat éventuellement pré-revêtu,
(2) éventuellement application d'une deuxième composition de revêtement de base sur le premier film de revêtement présent sur le substrat obtenu après l'étape (1) avant le durcissement du premier film de revêtement et la formation d'un deuxième film de revêtement adjacent au premier film de revêtement,
(3) application d'une troisième composition de revêtement sur le premier film de revêtement présent sur le substrat obtenu après l'étape (1) avant le durcissement du premier film de revêtement et la formation d'un troisième film de revêtement adjacent au premier film de revêtement dans le cas où l'étape éventuelle (2) n'est pas effectuée ou application d'une troisième composition de revêtement sur le deuxième film de revêtement présent sur le substrat obtenu après l'étape (2) avant le durcissement du deuxième film de revêtement et la formation d'un troisième film de revêtement adjacent au deuxième film de revêtement dans le cas où l'étape éventuelle (2) est réalisée,
dans lequel la troisième composition de revêtement est une composition de revêtement transparente selon la revendication 11 ou 12, et
(4) durcissement conjoint des premier et troisième et éventuellement deuxième films de revêtement, le troisième film de revêtement durci étant la couche la plus à l'extérieur du système de revêtement multicouche formé, pour obtenir des première, éventuellement deuxième, et troisième couches de revêtement durcies.

15. Substrat revêtu, qui peut être obtenu par le procédé selon la revendication 13 ou 14.
